# EUROPEAN PATENT SPECIFICATION

(11) **EP 3 289 719 B1**
(45) Date of publication and mention of the grant of the patent: **28.02.2024**
(21) Application number: 16724770.9
(22) Date of filing: 29.04.2016
(51) Int. Cl.: H04L 5/00, H04L 25/02, H04L 27/26

(54) **NULL DATA PACKET FRAME STRUCTURE FOR WIRELESS COMMUNICATION**
NULL-DATEN-PACKET-RAHMENSTRUKTUR FÜR SCHNURLOSE KOMMUNIKATION
STRUCTURE DE TRAME DE PAQUETS DE DONNÉES VIDES POUR LA COMMUNICATION SANS FIL

(30) Priority: 01.05.2015 US 201562156005 P; 28.04.2016 US 201615141113
(43) Date of publication of application: 07.03.2018
(73) Proprietor: Qualcomm Incorporated, San Diego, CA 92121-1714 (US)
(72) Inventor: MERLIN, Simone, San Diego, California 92121-1714 (US); KIM, Youhan, San Diego, California 92121-1714 (US); TIAN, Bin, San Diego, California 92121-1714 (US); VERMANI, Sameer, San Diego, California 92121-1714 (US)
(74) Representative: Bardehle Pagenberg Partnerschaft mbB Patentanwälte Rechtsanwälte
(86) International application number: PCT/US2016/030077
(87) International publication number: WO 2016/178982

(56) References cited:
- WO-A1-2016/069729
- WO-A2-2011/006108
- US-A1- 2012 033 614
- US-A1- 2013 114 757
- US-A1- 2014 348 097
- ZELST VAN ALLERT ET AL: "VHT-SIG-B in NDPs", IEEE 802.11-10/1290R0, , 2 November 2010 (2010-11-02), pages 1-14, XP002662888, Retrieved from the Internet: URL:http://www.google.nl/url?sa=t&rct=j&q= 10%2F1290r0&source=web&cd=1&ved=0CB0QFjAA& url=https%3A%2F%2Fmentor.ieee.org%2F802.11 %2Fdcn%2F10%2F11-10-1290-00-00ac-vht-sig-b -in-ndps.ppt&ei=5tq3TqPrA4WhOtDh9OMB&usg=A FQjCNEm6_k0sREKwMQtXfWkdhh2WJj42w&cad=rja [retrieved on 2011-11-07]

## Description

### BACKGROUND

### FIELD OF THE DISCLOSURE

The present disclosure, for example, relates to wireless communication systems, and more particularly to sounding procedures using null data packet (NDP) frames.

### DESCRIPTION OF RELATED ART

Wireless communications systems are widely deployed to provide various types of communication content such as voice, video, packet data, messaging, broadcast, and so on. These systems may be multiple-access systems capable of supporting communication with multiple users by sharing the available system resources (*e.g*., time, frequency, and power). A wireless network, for example a Wireless Local Area Network (WLAN), such as a Wi-Fi network (IEEE 802.11) may include an access point (AP) that may communicate with one or more stations or mobile devices. The AP may be coupled to a network, such as the Internet, and enable a mobile device to communicate via the network (and/or communicate with other devices coupled to the AP).

A protocol or standard used in a wireless network may define certain data frames, the structure of the frames, and what type of information may be included in the frames. Changes may be made to the protocol or standard that add, delete, or redefine frames. A typical Wi-Fi frame has a physical layer header followed by a payload. However, a null data packet (NDP) frame may include a preamble but does not include a payload. Nevertheless, an NDP frame may be used in certain types of wireless networks to convey information between an AP and a wireless station. In some cases, an AP or a station may transmit a relatively large amount of data using relatively high bandwidth, which may require substantial amounts of receive processing at the device receiving the transmission.

Conventional NDP frames, however, may not provide a sufficiently complex structure to support multi-user systems while also providing a legacy portion. Furthermore, conventional NDP frames may carry only specific information, including synchronization and estimation frames. In addition, conventional NDP frames may be limited in use to a bandwidth of 1MHz to 16 MHz.

Document US 2014/0348097 A1 relates to a method of performing channel sounding in a wireless LAN system. A NDP announcement frame may be transmitted for providing notice of a NDP to be transmitted.
Document US 2013/0114757 A1 relates to transmitting PLCP header for sub 1 GHz communication. A method of transmitting a physical layer convergence protocol header may comprise the step of generating a short training field sequence over 1 OFDM symbol.
Document US 2012/0033614 A1 relates to using information in a Very High Throughput Signal B field in the preamble of a NDP.
"VHT-SIG-B in NDP" of Allert Van Zelst et al. proposes fixed bit pattern for VHT-SIG-B to fill in a TBD in the 11ac spec framework.
Document WO 2011/006108 A2, which falls under Article 54(3) EPC, relates to systems and/or methods for communication that generate a plurality of spatial streams. Each of the spatial streams comprises a plurality of symbols. At least a portion of a training sequence is distributed across a first symbol in a first one of the spatial streams and a second symbol in a second one of the spatial streams.

However, there still exists a need for an improved technique for sounding procedures using NDP frames.

The present invention provides a solution according to the subject matter of the independent claims.

### SUMMARY

The present description discloses techniques for sounding procedures associated with multi-user (MU) transmissions using null data packet (NDP) frames (*e.g*., in a Wi-Fi system). However, the invention concerns only those parts of the present description and disclosure that relate to the subject-matter defined in the appended independent claims.

An NDP frame is a data frame that includes a preamble portion but no payload. Structures and functionalities of the NDP frame are described herein. The NDP frame may be backwards compatible with previous communications standards by including a legacy portion along with a non-legacy portion. Techniques for increasing the amount of available processing time for such high bandwidth communications may provide enhanced communications capability for devices that may have insufficient processing capacity to perform such receive processing within established time periods, such as within a short interframe space (SIFS), for performing receive processing, and generating and transmitting feedback related to the received transmission. The NDP frame may include a set or sub-set of several different fields and may be transmitted across different bandwidths or spatial streams.

A method of wireless communication is described. The method according to the invention includes generating an NDP frame comprising a physical layer preamble having a legacy preamble portion, a non-legacy portion, and an extension portion, wherein the extension portion is one member from the group consisting of: high efficiency (HE) signal information and a padding waveform, and transmitting the NDP frame.

A communications device is described. The communications device according to the invention includes means for generating an NDP frame comprising a physical layer preamble having a legacy preamble portion, a non-legacy portion, and an extension portion, wherein the extension portion is one member from the group consisting of: HE signal information and a padding waveform, and means for transmitting the NDP frame.

A further communications device is described. The communications device may include a processor, memory communicatively coupled to the processor. The memory may comprise computer-readable code that, when executed by the processor, causes the communications device to generate an NDP frame comprising a physical layer preamble having a legacy preamble portion, a non-legacy portion, and an extension portion, wherein the extension portion is one member from the group consisting of: HE signal information and a padding waveform. The communications device may also include a transmitter to transmit the NDP frame.

A non-transitory computer-readable medium comprising computer-readable code is described. The computer-readable code, when executed, causes a device to generate an NDP frame comprising a physical layer preamble having a legacy preamble portion, a non-legacy portion, and an extension portion, wherein the extension portion is one member from the group consisting of: HE signal information, and a padding waveform, and transmit the NDP frame.

Some examples of the method, devices, or non-transitory computer-readable medium described above may further include determining a duration of the extension portion based at least in part on an at least one station intended to receive the NDP frame. The extension portion of the NDP frame is to be used by the station to provide an estimated additional time relative to a short interframe space (SIFS) sufficient for processing the NDP frame.

In some examples of the method, devices, or non-transitory computer-readable medium described above, determining the duration of the extension portion further comprises determining the duration of the extension portion based at least in part on a IEEE 802.11 physical layer specification associated with the at least one station intended to receive the NDP frame.

In some examples of the method, devices, or non-transitory computer-readable medium described above, generating the NDP frame further comprises determining channel state information (CSI) parameters for a CSI response to be provided responsive to the NDP frame and including an indication of the CSI parameters in the NDP frame. Additionally or alternatively, in some examples, generating the NDP frame further comprises determining control information for an at least one station intended to receive the NDP frame and including the control information in the NDP frame. In some examples, the NDP frame includes an HE signal field, wherein at least one bit in the HE signal field indicates that the frame is an NDP frame.

In some examples of the method, devices, or non-transitory computer-readable medium described above, generating the NDP frame further comprises generating the non-legacy portion to include a first HE signal field designated as HE-SIG-A and a second HE signal field different from the first signal field. Additionally or alternatively, in some examples, generating the NDP frame further comprises determining control information for at least one station and including the control information in the first HE signal field.

In some examples of the method, devices, or non-transitory computer-readable medium described above, generating the NDP frame further comprises determining control information for at least one station and including the control information in the second HE signal field. In some examples, the second HE signal field comprises an HE short training field structure. In other examples, the second HE signal field comprises an HE long training field structure.

Some examples of the method, devices, or computer program according to the invention further include determining a duration of the extension portion based at least in part on at least a number of HE long training fields in the HE long training field structure. Additionally some examples of the method, devices, or non-transitory computer-readable medium described above may further include determining a duration of the extension portion based at least in part on at least a length field in the legacy portion of the physical layer preamble, wherein the length field is based at least in part on a number of HE long training fields in the HE long training field structure.

In some examples of the method, devices, or non-transitory computer-readable medium described above, the second HE signal field comprises an indication of an allocation of uplink multi-user resources for a response to the NDP frame. In other examples, the second HE signal field comprises information associated with a per-station parameterization of channel state information.

In some examples of the method, devices, or non-transitory computer-readable medium described above, the extension portion is a padding waveform and the padding waveform comprises a third HE signal field different from the second HE signal field. In some examples, the third HE signal field comprises an allocation of uplink multi-user resources for a response to the NDP frame. Additionally or alternatively, in other examples, the third HE signal field comprises a per-station parameterization of channel state information.

In some examples of the method, devices, or non-transitory computer-readable medium described above, the transmitting the NDP frame further comprises transmitting the third HE signal field as a single spatial stream on a 20 MHz channel. Additionally or alternatively, in some examples, the transmitting the NDP frame further comprises transmitting the third HE signal field as duplicated spatial steams across two or more 20 MHz channels.

In some examples of the method, devices, or non-transitory computer-readable medium described above, the extension portion is a padding waveform devoid of information.

In some examples of the method, devices, or non-transitory computer-readable medium described above, the extension portion is a padding waveform having physical layer information.

In some examples of the method, devices, or non-transitory computer-readable medium described above, generating the NDP frame further comprises excluding an HE short training field. Additionally or alternatively, in some examples, a duration of the extension portion is indicated in an HE signal field in the non-legacy portion of the physical layer preamble.

Some examples of the method, devices, or non-transitory computer-readable medium described above may further include generating an NDP Announcement (NDPA) frame comprising information indicative of an HE sounding procedure and transmitting the NDPA frame prior to transmitting the NDP frame.

A method of wireless communication is described. The method includes receiving an NDP frame comprising a physical layer preamble having a legacy preamble portion, a non-legacy portion, and an extension portion, wherein the extension portion is one member from the group consisting of: high efficiency (HE) signal information and a padding waveform, and processing the NDP frame.

A communications device is described. The communications device may include means for receiving an NDP frame comprising a physical layer preamble having a legacy preamble portion, a non-legacy portion, and an extension portion, wherein the extension portion is one member from the group consisting of: HE signal information and a padding waveform, and means for processing the NDP frame.

A further communications device is described. The communications device may include a processor, memory communicatively coupled to the processor. The memory may comprise computer-readable code that, when executed by the processor, causes the communications device to receive an NDP frame comprising a physical layer preamble having a legacy preamble portion, a non-legacy portion, and an extension portion, wherein the extension portion is one member from the group consisting of: HE signal information and a padding waveform, and process the NDP frame.

A non-transitory computer-readable medium comprising computer-readable code is described. The computer-readable code, when executed, causes a device to receive an NDP frame comprising a physical layer preamble having a legacy preamble portion, a non-legacy portion, and an extension portion, wherein the extension portion is one member from the group consisting of: HE signal information, and a padding waveform, and process the NDP frame.

In some examples of the method, communications devices, or computer-readable medium described above, processing the NDP frame includes using the extension portion of the NDP frame to provide an estimated additional time, relative to a SIFS, sufficient for processing the NDP frame.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Characteristics of the concepts disclosed herein, both their organization and method of operation, together with associated advantages will be better understood from the following description when considered in connection with the accompanying figures. Each of the figures is provided for the purpose of illustration and description only, and not as a definition of the limits of the claims.

### BRIEF DESCRIPTION OF THE DRAWINGS

A further understanding of the nature and advantages of the present disclosure may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 shows a block diagram of a wireless communication system, in accordance with various aspects of the present disclosure;
FIG. 2 shows a flow diagram of an example null data packet (NDP) frame exchange in a wireless communication system, in accordance with various aspects of the present disclosure;
FIG. 3 shows a block diagram of an example NDP frame, in accordance with various aspects of the present disclosure;
FIG. 4 shows a block diagram of an example legacy preamble portion of an NDP frame, in accordance with various aspects of the present disclosure;
FIG. 5A shows a block diagram of an example non-legacy and extension portions of an NDP frame, in accordance with various aspects of the present disclosure;
FIG. 5B shows a block diagram of another example non-legacy and extension portions of an NDP frame, in accordance with various aspects of the present disclosure;
FIG. 5C shows a block diagram of another example non-legacy and extension portions of an NDP frame, in accordance with various aspects of the present disclosure;
FIGs. 6 and 7 show block diagrams of example non-legacy portions of an NDP frame without per-station portions, in accordance with various aspects of the present disclosure;
FIG. 8 shows a block diagram of an example NDP frame transmitted over 40 megahertz (MHz), in accordance with various aspects of the present disclosure;
FIGs. 9-11 show block diagrams of example NDP frames transmitted over 80 megahertz (MHz), in accordance with various aspects of the present disclosure;
FIG. 12 shows a flow diagram of an example NDP frame exchange in response to a trigger frame in a wireless communication system, in accordance with various aspects of the present disclosure;
FIGs. 13 and 14 show block diagrams of example NDP frames transmitted in response to a trigger frame, in accordance with various aspects of the present disclosure;
FIG. 15 shows a block diagram of an example NDP clear to transmit (CTX) frame, in accordance with various aspects of the present disclosure;
FIGs. 16-18 show block diagrams of example high efficiency signal fields of an NDP frame, in accordance with various aspects of the present disclosure;
FIG. 19 shows a block diagram of a device configured for use in wireless communication, in accordance with various aspects of the present disclosure;
FIG. 20 shows a block diagram of a device configured for use in wireless communication, in accordance with various aspects of the present disclosure;
FIG. 21 shows a block diagram of a wireless communication system, in accordance with various aspects of the present disclosure;
FIG. 22 shows a block diagram of an apparatus for use in wireless communication, in accordance with various aspects of the present disclosure;
FIG. 23 shows a block diagram of an apparatus for use in wireless communication, in accordance with various aspects of the present disclosure;
FIG. 24 shows a block diagram of a wireless station for use in wireless communication, in accordance with various aspects of the present disclosure; and
FIGs. 25-27 show flow charts illustrating example methods for wireless communication, in accordance with various aspects of the present disclosure.

### DETAILED DESCRIPTION

According to aspects of the present disclosure, a null data packet (NDP) frame may be structured such that it can be backwards compatible with previous wireless standards and may also present information in an efficient manner. The NDP frame may include a legacy portion to provide for backwards compatibility as well as a non-legacy portion that includes information used in a new wireless standard. As used in a prior wireless standard, NDP frames may not include sufficient structure to support multi-user systems and may not include a legacy portion. Furthermore, NDP frames as used in a prior wireless standard carry limited specific information, including synchronization and estimation frames. In addition, NDP frames as used in a prior wireless standard may be limited in use to a bandwidth of 1MHz to 16 MHz.

By contrast, an NDP frame as per the present disclosure may have a more complicated structure. An NDP frame may carry additional information than conventional NDP frames. The structure of NDP frames of the present disclosure is not limited to single user situations, but advantageously allows an NDP frame to be used in multi user (MU) orthogonal frequency division multiple access (OFDMA) and MU multiple-input and multiple-output (MIMO) systems. Furthermore, an NDP frame may be transmitted over a higher bandwidth of up to 80 MHz.

There are several different possible structures and functions for an NDP frame. These possibilities include how many recipients (e.g., wireless stations) are intended to receive the NDP, a bandwidth the NDP is going to be transmitted over, whether the NDP is in response to a trigger frame, or whether the NDP is used for block acknowledgement, for example. Further, the NDP may include one or more of several different fields that contain specific information. Devices, methods, and structures are described herein for generating and using an NDP frame.

In some examples, the high-bandwidth, or high efficiency (HE), transmission may be transmitted according to a wireless communications standard, such as but not limited to IEEE 802.11ax, which may support relatively high data rates. For example, IEEE 802.1 1ax may support data rates that are up to four times the data rates supported by IEEE 802.11ac. Furthermore, processing time available according to IEEE 802.11ax at the end of a packet transmission, such as an NDP frame according to various aspects of the present disclosure, may be set to be the same duration as processing time available according to IEEE 802.11ac (e.g., a 16 µs SIFS). However, due to the increased amount of processing associated with HE transmission, certain wireless devices (e.g., wireless stations or access points) may not have sufficient processing capability to complete necessary processing within the time available at the end of a packet transmission.

Accordingly, various techniques are described for providing an extension signal for NDP frames in high bandwidth wireless communications. For example, a wireless device (*e.g*., a wireless station or an access point) may add a padding waveform to an end of an NDP frame in order to provide adequate time for a receiving device to complete necessary processing. The extension may be in the form of a padding waveform added to the end of a sounding NDP.

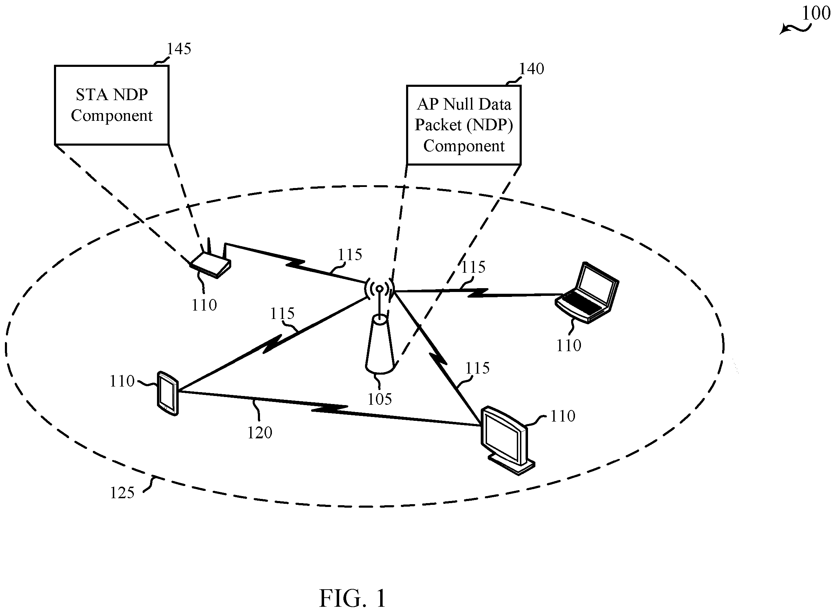

Referring first to **FIG. 1**, a block diagram illustrates an example of a wireless area network (WLAN) 100. The WLAN 100 may include an access point (AP) 105 and one or more wireless stations 110 (*e.g*., STAs) or devices, such as mobile stations, personal digital assistants (PDAs), other handheld devices, netbooks, notebook computers, tablet computers, laptops, display devices (*e.g*., TVs, computer monitors, *etc*.), printers, and the like. While only one AP 105 is illustrated, the WLAN 100 may have multiple APs 105. Each of the wireless stations 110, which may also be referred to as mobile stations (MSs), mobile devices, access terminals (ATs), user equipment (UE), subscriber stations (SSs), or subscriber units, may associate and communicate with an AP 105 via a communication link 115. Each AP 105 has a geographic coverage area 125 such that wireless stations 110 within that area can typically communicate with the AP 105. The wireless stations 110 may be dispersed throughout the geographic coverage area 125. Each wireless station 110 may be stationary or mobile.

In some examples, a wireless station 110 can be covered by more than one AP 105 and can therefore associate with one or more APs 105 at different times. A single AP 105 and an associated set of stations may be referred to as a basic service set (BSS). An extended service set (ESS) is a set of connected BSSs. A distribution system (DS) is used to connect APs 105 in an extended service set. A geographic coverage area 125 for an AP 105 may be divided into sectors making up only a portion of the coverage area. The WLAN 100 may include APs 105 of different types (*e.g*., metropolitan area, home network, *etc.),* with varying sizes of coverage areas and overlapping coverage areas for different technologies. Other wireless devices can also communicate with the AP 105.

While the wireless stations 110 may communicate with each other through the AP 105 using communication links 115, each wireless station 110 may also communicate directly with one or more other wireless stations 110 via a direct wireless link 120. Two or more wireless stations 110 may communicate via a direct wireless link 120 when both wireless stations 110 are in the AP geographic coverage area 125 or when one or neither wireless station 110 is within the AP geographic coverage area 125. Examples of direct wireless links 120 may include Wi-Fi Direct connections, connections established by using a Wi-Fi Tunneled Direct Link Setup (TDLS) link, and other P2P group connections. The wireless stations 110 in these examples may communicate according to the WLAN radio and baseband protocol including physical and medium access control (MAC) layers. In other implementations, other peer-to-peer connections and/or ad hoc networks may be implemented within WLAN 100.

The WLAN 100 may be a multi-user (MU) wireless network such as an MU multiple-input and multiple-output (MIMO) network. Thus, in the WLAN 100, an AP 105 may transmit messages such as control frames to one or more wireless station 110 at a same time. Similarly, some or all of the wireless stations 110 may simultaneously transmit messages to the AP 105 in response to one or more control frames transmitted by the AP 105. Communication frames between the AP 105 and the wireless stations 110 may include NDP frames. For example, the AP 105 may include an AP NDP component 140. The AP NDP component 140 may generate and format NDP frames and decode received NDP frames. Likewise, a wireless station 110 may include a STA NDP component 145. The station NDP component 145 may also generate and format NDP frames and decode received NDP frames. Additional details describing the AP NDP component 140 and the STA NDP component 145 are provided below.

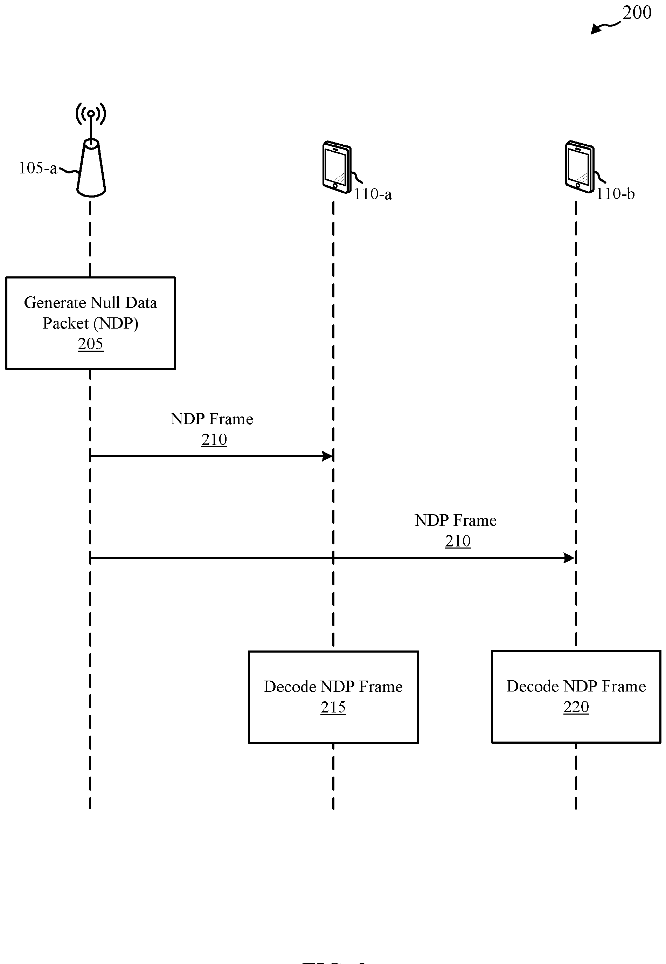

**FIG. 2** shows a diagram 200 of an example NDP frame exchange in a wireless communication system, in accordance with various aspects of the present disclosure. In this example, an NDP frame 210 is exchanged between an AP 105-a and two wireless stations 110-a and 110-b. The AP 105-a may be an example of one or more aspects of the AP 105 described with reference to FIG. 1. Similarly, the wireless stations 110-a and 110-b may be examples of one or more aspects of wireless stations 110 described with reference to FIG. 1.

The AP 105-a may generate an NDP frame, such as NDP frame 210, at block 205. Contents of the NDP 210 will be described in more detail below. The NDP may include information for one or more stations, such as the wireless stations 110-a and 110-b. For example, the NDP may include a portion for information relevant to both wireless stations 110-a and 110-b. The NDP may also include portions that contain information relevant to only one of the wireless stations 110-a and 110-b. In some examples, the NDP frame 210 may include an extension at an end thereof to allow additional processing time for wireless station 110-a or wireless station 110-b to complete processing associated with the NDP frame 210, as will be discussed in more detail below.

In the example shown in FIG. 2, the AP 105-a transmits the NDP frame 210 to the wireless station 110-a and the wireless station 110-b. In some examples, the AP 105-a may broadcast the NDP frame 210. In some examples, the NDP frame 210 may be transmitted over a bandwidth with more than one channel, such as an 80 megahertz (MHz) band having four 20 MHz channels. In such an example, the wireless stations 110-a and 110-b may only receive portions of the NDP frame 210 on the channel assigned to the particular wireless station 110. In other examples, the NDP frame 210 can also be sent by a wireless station 110 to an AP 105. For such an example, the NDP frame 210 may have a format that includes broadcast or unicast information (*i.e.,* the wireless station 110 generated NDP frame 210 would not have data for multiple stations).

The wireless station 110-a may decode the received NDP frame 210 at block 215. Likewise, the wireless station 110-b may decode the received NDP frame at block 220. The wireless station 110-a may decode only portions of the NDP frame 210 relevant to the station 110-a. For example, the wireless station 110-a may only decode the portion of the NDP frame 210 that the station 110-a receives on its assigned channel. Similarly, the wireless station 110-b may decode only portions of the NDP frame 210 relevant to the wireless station 110-b. For example, the wireless station 110-b may only decode the portion of the NDP frame 210 that the wireless station 110-b receives on its assigned channel.

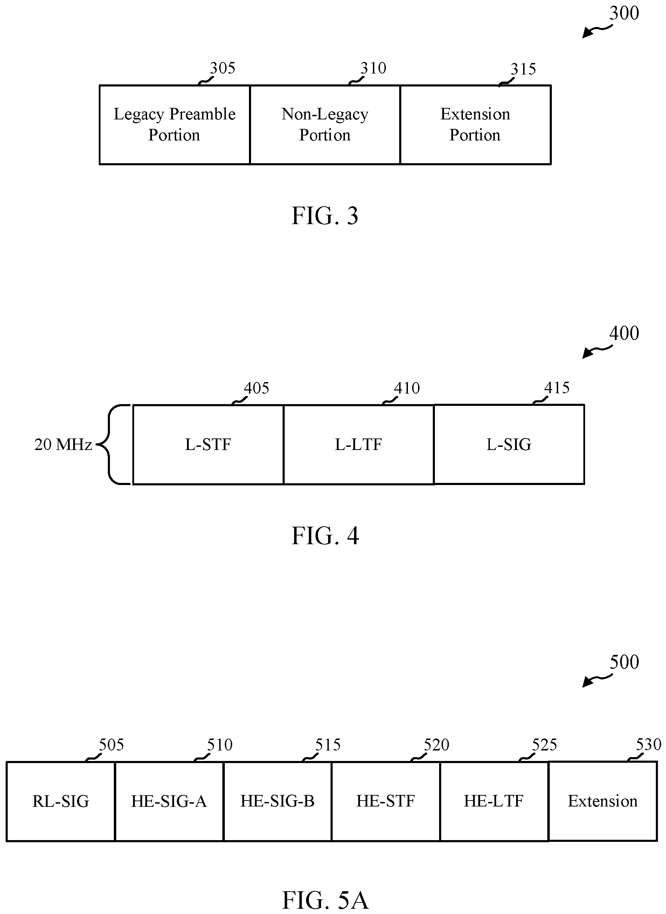

**FIG. 3** shows a block diagram of an example NDP frame 300, in accordance with various aspects of the present disclosure. The NDP frame 300 may be an example of one or more aspects of the NDP frame 210 described with reference to FIG. 2. The NDP frame 300 may be a physical layer convergence protocol (PLCP) protocol data unit (PPDU) without a physical layer service data unit (PSDU). In other words, the NDP frame 300 includes a PLCP header (*i.e.,* a physical (PHY) preamble) but does not include a payload portion.

A typical Wi-Fi frame includes a physical layer header that is followed by a payload. However, the NDP frame 300 includes a PHY preamble but has no payload. The NDP frame 300 may carry some information in sub-frames. In some examples, the information the NDP frame 300 carries is in accordance with the 802.11ax standard. In some examples, the NDP frame 300 may be applicable to frequencies including and between 2.4 and 5 gigahertz (GHz).

The NDP frame 300 includes three portions: a legacy portion 305, a non-legacy portion 310, and an extension portion 315. The legacy portion 305 and the non-legacy portion 310 may both be preamble portions. The legacy portion 305 may conform to one standard (*e.g*., 802.11a), while the non-legacy portion 310 and extension portion 315 may conform to another, different standard (*e.g*., 802.11ax). The legacy portion 305 may enable the NDP frame 300 to be backwards compatible with an older standard when the NDP frame 300 is used with a new standard. The legacy portion 305 may be appended in front of each non-legacy portion 310. That is, the legacy portion 305 may be transmitted before the non-legacy portion 310.

The non-legacy portion 310 and extension portion 315 may be high-efficiency (HE) portions. The HE portions may conform to a different Wi-Fi standard than the legacy portion 305. For example, the non-legacy portion 310 and extension portion 315 may conform to the 802.11ax standard.

In some examples, the legacy portion 305 conforms to the 802.11a standard. The legacy portion 305 may be 20 MHz wide. When the NDP frame 300 is transmitted, the legacy portion 305 may be repeated for each 20 MHz channel that the PPDU (i.e., the NDP frame 300) spans. For 20 MHz and less, for example, the legacy portion 305 is followed by the non-legacy portion 310 and extension portion 315. For 40 MHz, the legacy portion 305 may be duplicated in each 20 MHz channel. That is, a copy of the legacy portion 305 may be sent in each 20 MHz channel, which may include a guard interval (GI) between the copies. The copies of the legacy portion 305 may be followed by the non-legacy portion 310 and extension portion 315.

**FIG. 4** shows a block diagram of an example legacy preamble portion 400 of an NDP frame, in accordance with various aspects of the present disclosure. The legacy preamble portion 400 may be an example of one or more aspects of the legacy portion 305 described with reference to FIG. 3.

The legacy preamble portion 400 may include a legacy short training field (L-STF) 405, a legacy long training field (L-LTF) 410, a legacy signal field (L-SIG) 415, or combinations thereof. The L-STF 405 may be an OFDM symbol. The L-STF 405 may be used for start-of-packet detection, automatic gain control (AGC), and initial frequency offset estimation and initial time synchronization. The L-LTF 410 may be used for channel estimation and for more accurate frequency offset estimation and initial time synchronization than the L-STF 405. The L-SIG 415 may include rate and length information for the NDP frame that includes the L-SIG 415.

In one particular example, the L-STF 405 is approximately 8 microseconds (µs) long, the L-LTF 410 is approximately 8 µs long, and the L-SIG 415 is approximately 4 µs long. However, this is merely one example, and in other examples, the L-STF 405, the L-LTF 410, and the L-SIG 415 may be of other durations. The fields 405, 410, and 415 of the legacy preamble portion 400 may conform with an 802.11a standard, such as 802.11ah.

**FIG. 5A** shows a block diagram of an example non-legacy and extension portions 500 of an NDP frame, in accordance with various aspects of the present disclosure. The non-legacy and extension portions 500 may be an example of one or more aspects of the non-legacy portion 310 described with reference to FIG. 3.

The non-legacy and extension portions 500 may be high efficiency (HE) portions. The non-legacy and extension portions 500 conform to a different standard or protocol than a legacy portion, such as the legacy portion 305 of FIG. 3 or the legacy preamble portion 400 of FIG. 4. The non-legacy and extension portions 500 may include one or more of several fields, including a repetition legacy signal (RL-SIG) field 505, a first HE signal field (HE-SIG-A) 510, a second HE signal field (HE-SIG-B) 515, an HE short training field (HE-STF) 520, an HE long training field (HE-LTF) 525, and an extension portion 530.

The RL-SIG 505 may be a repetition of an L-SIG from a legacy preamble portion of the NDP frame, such as the L-SIG 415 of FIG. 4. The reliability of the NDP frame may be improved by repeating the L-SIG 415 in one or more of the portions of the non-legacy and extension portions 500. In some examples, the RL-SIG 505 may be approximately 4 µs long. In other examples, the RL-SIG 505 may be other durations.

The HE-SIG-A 510 may be an information field that includes information related to the format of the PPDU that is intended to be decoded by all recipients of the NDP frame. In some examples, the HE-SIG-A 510 is a fixed length. In one such example, the HE-SIG-A 510 has a length of 3.2 µs, plus the length of a guard interval. In other examples, the HE-SIG-A 510 may have different lengths. In some examples, the HE-SIG-A 510 may include one or more bits (e.g., a single bit in some implementations) that indicate that the frame is an NDP frame.

The HE-SIG-B 515 may be an information field that includes extended information related to the format of the packet or additional operational indications. The HE-SIG-B 515 may also be intended to be received and decoded by all recipients of the NDP frame. In some examples, the HE-SIG-B 515 is a variable length. In other examples, the HE-SIG-B 515 may be a fixed length. In still other examples, the HE-SIG-B 515 may be omitted.

The HE-STF 520 and the HE-LTF 525 may be training symbols that include information for refreshing channel estimation and synchronization. The HE-STF 520 and the HE-LTF 525 may include per-station information and may be transmitted only on a specific sub-band or spatial stream for that station. In one example, the HE-STF 520 may have a duration of approximately 4 to 8 µs. In some examples, the HE-STF 520 may be omitted. A duration of the HE-LTF 525 may be dependent on the number of spatial time streams (N_{STS}) used in the wireless communication system. In other examples, the durations of the HE-STF 520 and the HE-LTF 525 may differ from the specific examples described herein.

The non-legacy and extension portions 500 may also include extension portion 530. As mentioned above, the extension portion may be provided to allow for sufficient processing time after the receipt of an NDP frame to complete processing associated with the NDP frame. In some examples, a HE NDP frame may be used for sounding associated with multi-user (MU) transmissions, and may also indicate parameters for channel state information (CSI) to be reported by a device receiving the NDP frame. In some examples, an NDP frame may be identified by one or more bits (*e.g*., a single bit in some implementations) in HE-SIG-A 510 and/or by the value of a LENGTH field in L-SIG 415 or RL-SIG 505, for example.

In some examples, the extension portion 530 may include a third HE SIG field (HE-SIG-C), which may be transmitted with a single spatial stream or duplicated across spatial streams. In some examples, the extension portion 530 may include one or more of an allocation of uplink MU resources for a sounding response or per-STA parametrization of required CSI. In other examples, the extension portion 530 may include a padding waveform that is devoid of information, or may include a padding waveform that carries physical layer information unrelated to the sounding procedure, such as synchronization, timing, etc. The duration of the extension portion 530 may be a fixed value defined in a standard. In some cases, the duration of the extension portion 530 may be a function of the number of HE-LTFs 525. For example, a duration of the extension portion 530 can be derived in a proportional manner to a number of HE-LTFs 525 as a larger number of HE-LTFs 525 may require a longer processing time than a shorter number of HE-LTFs 525. In other examples, the duration of the extension portion 530 may be derived by a length field present in the legacy portion L-SIG 415 once the number of HE-LTFs 525 is known from the non-legacy and extension portions 500. For example, the legacy portion L-SIG 415 can indicate a length of the NDP that includes the non-legacy portion and the extension portion 500. In some cases, the duration of the non-legacy portion can be independently estimated by indications in HE-SIG-A 510. In this manner, a receiver component can identify a duration of the extension portion 530 alone. In some cases, the duration of the extension portion 530 alone may be smaller than an IEEE 802.11ax OFDM symbol. The duration of the extension portion 530 may be indicated in HE-SIG A 510 or in HE-SIG-B 515.

The RL-SIG 505, HE-SIG-A 510, and HE-SIG-B 515 may include information for each recipient of the NDP. That is, the information may be transmitted on each relevant channel, such as every 20 MHz channel of a 40 or 80 MHz bandwidth. In other examples, other channels and bandwidths may be used. In contrast, the HE-STF 520, HE-LTF 525, and extension portion 530 may be a per-station portion. That is, those fields may contain information relevant to only one station. In that case, different HE-STF 520, HE-LTF 525, and extension portion 530 may be transmitted on a separate channel for each station or in a different spatial stream per each station.

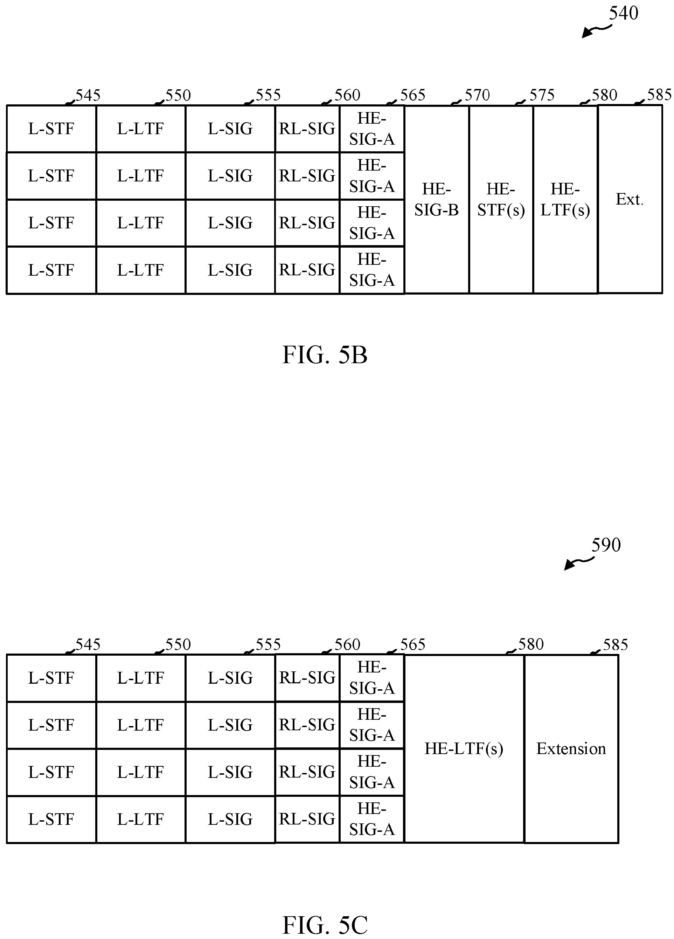

As mentioned above, in some examples the legacy portion of an NDP frame may be duplicated in multiple channels, while all or a portion of a non-legacy portion of extension portion may be transmitted using multiple channels. **FIG. 5B** shows a block diagram of an example NDP frame 540, in accordance with various aspects of the present disclosure. The NDP frame 540 may include legacy portions L-STF 545, L-LTF 550, and L-SIG 555, which may be examples of one or more aspects of the legacy portion 305 and legacy fields 405-415 described with reference to FIGs. 3 and 4. In this example, the legacy portions 545-555 may be duplicated four times (*e.g*., across four 20 MHz channels of an 80 MHz bandwidth). The NDP frame 540 may include non-legacy portions LR-SIG 560, HE-SIG-a 565, HE-SIG-B 570, HE STF(s) 575, and HE-LTF(s) 580, which may be examples of one or more aspects of the non-legacy portion 310, non-legacy fields 505 through 525, and extension portion 530 described with reference to FIGs. 3 and 5A. In the example of FIG. 5B, non-legacy fields RL-SIG 560 and HE-SIG-A 565 may be duplicated across multiple channels.

As mentioned above, in some examples, one or more non-legacy fields may be optional or may be omitted in certain deployments. For example, **FIG. 5C** shows an example in which HE-SIG-B 570 and HE-STF(s) 575 may be omitted from NDP frame 590. Of course, one of skill in the art will readily recognize that other or different fields may be provided or excluded from an NDP frame, depending upon conditions.

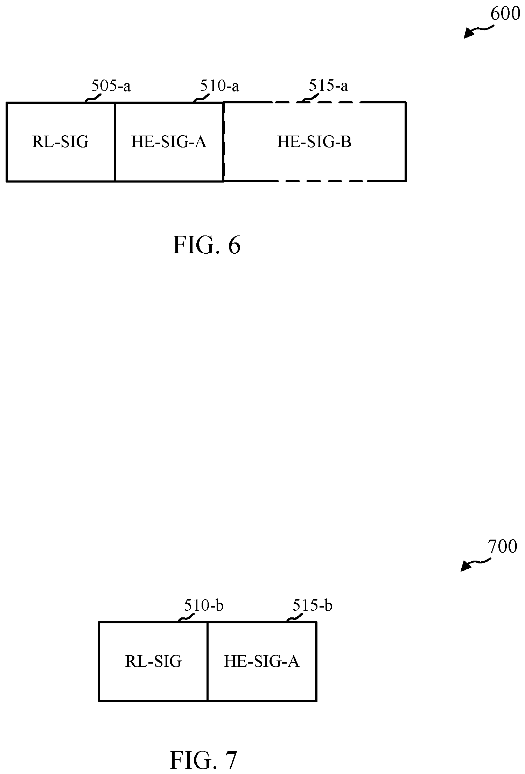

**FIG. 6** shows a block diagram of an example non-legacy portion 600 of an NDP frame without per-station portions, in accordance with various aspects of the present disclosure. The non-legacy portion 600 may be an example of one or more aspects of the non-legacy portion 310 and the non-legacy portions of the non-legacy and extension portions 500 described with reference to FIGs. 3 and 5A, and non-legacy portions of NDP frames 540 and 590 of FIGs. 5B and 5C.

In the example of FIG. 6, the non-legacy portion 600 includes only an RL-SIG 505-a, an HE-SIG-A 510-a, and an HE-SIG-B 515-a. The RL-SIG 505-a, HE-SIG-A 510-a, and HE-SIG-B 515-a may be examples of one or more aspects of the RL-SIG 505, HE-SIG-A 510, and HE-SIG-B 515 described with reference to FIG. 5A, respectively. That is, in this option, the HE portion 600 of the NDP frame may not include the per-station portion. This example may apply to a single user NDP. The non-legacy portion 600 may have this format if only information common for all the stations is needed to be transmitted in the NDP.

**FIG. 7** shows a block diagram of an example non-legacy portion 700 of an NDP frame without per-station portions, in accordance with various aspects of the present disclosure. The non-legacy portion 700 may be an example of one or more aspects of the non-legacy portion 310 and the non-legacy portions of the non-legacy and extension portions 500 described with reference to FIGs. 3 and 5A, respectively.

In the example of FIG. 7, the non-legacy portion 700 includes only an RL-SIG 505-b and an HE-SIG-A 510-b. The RL-SIG 505-b and HE-SIG-A 510 may be examples of one or more aspects of the RL-SIG 505 and HE-SIG-A 510 described with reference to FIGs. 5A and 6. That is, in this option, the HE portion 600 of the NDP frame may not include the per-station portion nor an HE-SIG-B portion. This format may be used for single user NDP when all information to be included in the NDP can be included in the HE-SIG-A 510-b.

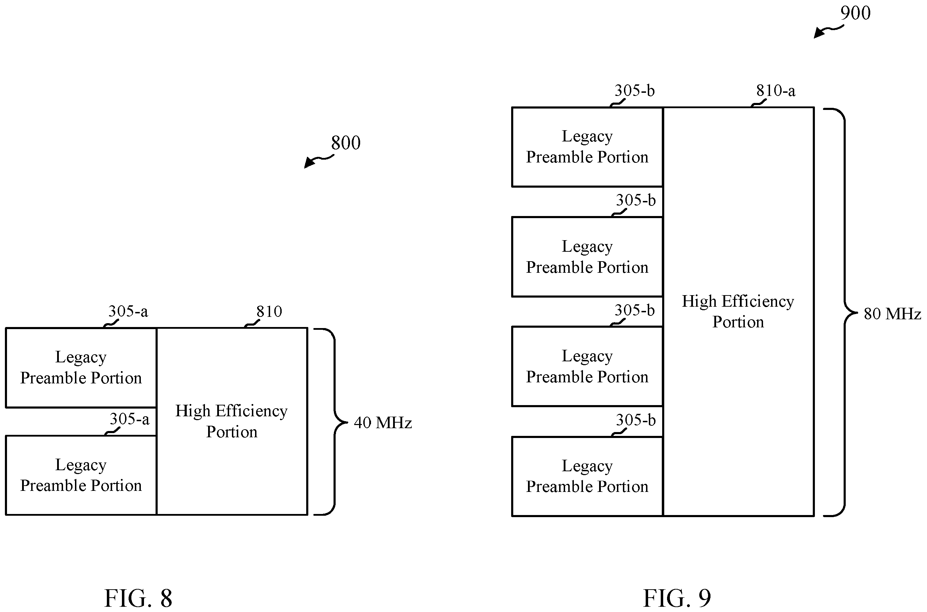

**FIG. 8** shows a block diagram of an example NDP frame 800 transmitted over 40 MHz, in accordance with various aspects of the present disclosure. The NDP frame 800 may be an example of one or more aspects of the NDP frame 210, 300, 540, and 590 of FIGs. 2, 3, 5B, and 5C. The NDP frame 800 may also include an example of one or more aspects of the legacy portions 305 and 400 of FIGs. 3 and 4 and an example of one or more aspects of the non-legacy portion 310, the non-legacy portions of the non-legacy and extension portions 500, the non-legacy portion 600, and the non-legacy portion 700 of FIGs. 3 and 4-7.

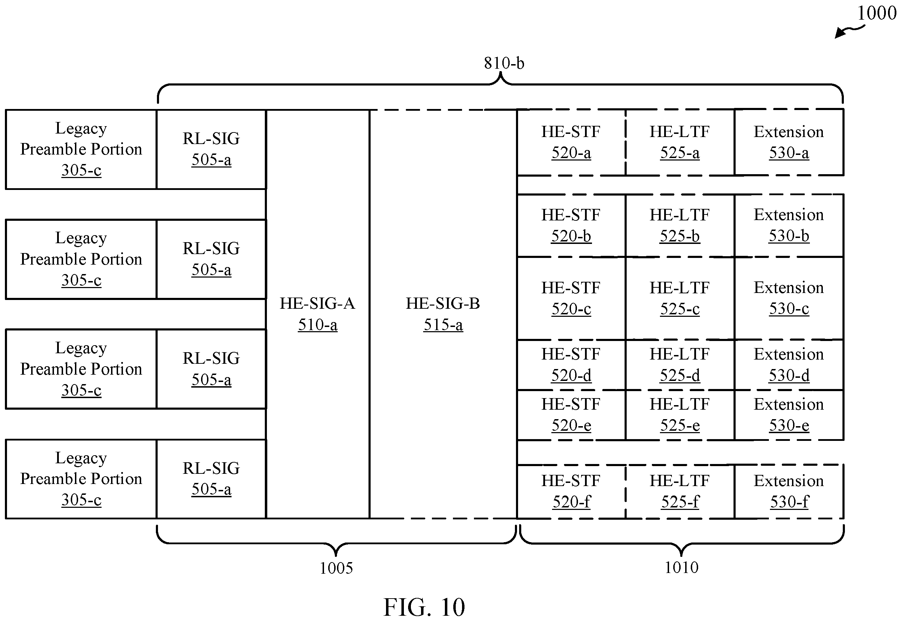

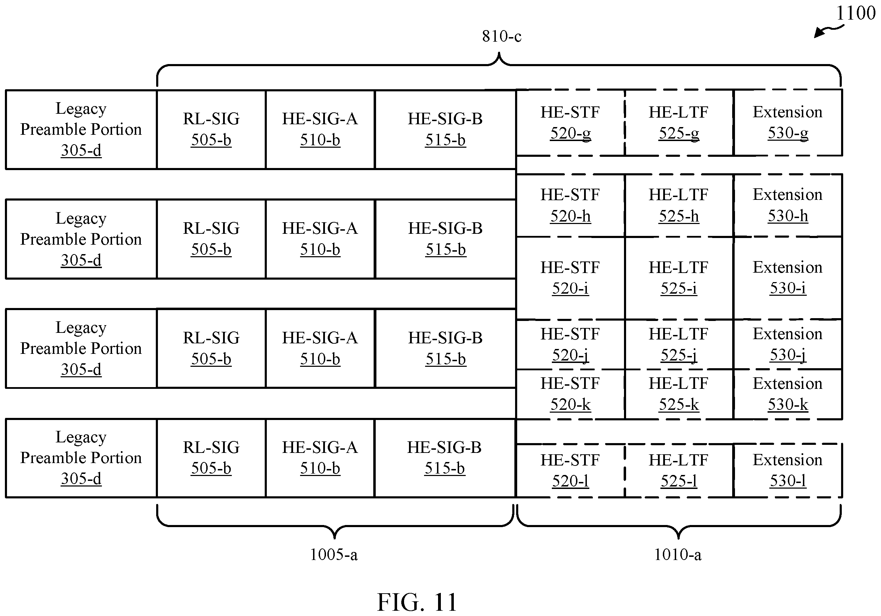

In the example of FIG. 8, the NDP frame 800 spans a 40 MHz channel and includes two copies of a legacy preamble portion 305-a and a high efficiency portion 810. The legacy preamble portion 305-a is repeated for each 20 MHz channel that is spanned by the NDP frame 800 (i.e., the PPDU). The legacy preamble portions 305-a may be separated by a guard interval, for example. The high efficiency portion 810 may be defined over the 40 MHz or it may be defined over only 20 MHz and then duplicated over the 40 MHz. A similar example is described in more detail below in FIGs. 10 and 11. In other examples, the NDP frame 800 may span other bandwidths and may include some or no duplicated portions.

**FIG. 9** shows a block diagram of an example NDP frame 900 transmitted over 80 MHz, in accordance with various aspects of the present disclosure. The NDP frame 900 may be an example of one or more aspects of the NDP frame 210, 300, 540, and 590 of FIGs. 2, 3, 5B, and 5C. The NDP frame 900 may also include an example of one or more aspects of the legacy portions 305 and 400 of FIGs. 3, 4, and 8 and an example of one or more aspects of the non-legacy portion 310, the non-legacy portions of the non-legacy and extension portions 500, the non-legacy portion 600, and the non-legacy portion 700 of FIGs. 3 and 5-8.

In the example of FIG. 9, the NDP frame 900 spans an 80 MHz channel and includes four copies of a legacy preamble portion 305-b and a single copy of a high efficiency portion 810-a. The legacy preamble portion 305-b is repeated for each 20 MHz channel that is spanned by the NDP frame 900 (*i.e.,* the PPDU). The legacy preamble portions 305-a may be separated by a guard interval, for example. The high efficiency portion 810-a may be defined over the 80 MHz or it may be defined over only 20 MHz and then duplicated over the 80 MHz. A similar example is described in more detail below in FIGs. 10 and 11. In other examples, the NDP frame 900 may span other bandwidths and may include some or no duplicated portions.

**FIG. 10** shows a block diagram of an example NDP frame 1000 transmitted over 80 MHz, in accordance with various aspects of the present disclosure. The NDP frame 1000 may be an example of one or more aspects of the NDP frame 210, 300, 540, 590, and 900 of FIGs. 2, 3, 5B, 5C and 9. The NDP frame 1000 may also include an example of one or more aspects of the legacy portions 305 and 400 of FIGs. 3, 4, and 8 and an example of one or more aspects of the non-legacy portion 310, the non-legacy portions of the non-legacy and extension portions 500, the non-legacy portion 600, and the non-legacy portion 700 of FIGs. 3 and 5-9.

In the example of FIG. 10, the NDP frame 1000 spans an 80 MHz channel and includes four copies of a legacy preamble portion 305-c spread over four 20 MHz channels, with guard intervals in between. The legacy preamble portion 305-c may be repeated for each 20 MHz channel that is spanned by the NDP frame 1000.

The NDP frame 1000 includes a high efficiency portion 810-b that includes an all-station portion 1005 and a per-station portion 1010. The high efficiency portion 810-b may be defined over the 80 MHz or a 20 MHz channel of the 80 MHz. In the example illustrated in FIG. 10, the all-station portion 1005 includes the RL-SIG 505-a, which may be a repetition of the legacy preamble portion 305-c, repeated over each 20 MHz channel, and an HE-SIG-A 510-a and an HE-SIG-B 515-a spanning the entire 80 MHz.

The per-station portion 1010 may include an HE-STF 520-a, an HE-LTF 525-a, and an extension portion 530-a for a first station. The per-station portion 1010 may also include HE-STF 520-b through 520-f, HE-LTF 525-a through 525-f, and extension portion 530-a through 530-f, for a second station through a sixth station, respectively. The fields for each specific station in the per-station portion 1010 span the bandwidth of the particular station. The information contained in HE-STF 520-a through HE-STF 520-f may be different and individualized for their respective stations. Likewise, the information contained in HE-LTF 525-a through HE-LTF 525-f may be different and individualized for their respective stations. Similarly, the information contained in extension portion 530-a through extension portion 530-f may be different and individualized for their respective stations.

In some examples, the per-station portion 1010 is not present in the NDP frame 1000. In other examples, some sub-set of the fields shown in FIG. 10 are included in the NDP frame 1000.

**FIG. 11** shows a block diagram of an example NDP frame 1100 transmitted over 80 MHz, in accordance with various aspects of the present disclosure. The NDP frame 1100 may be an example of one or more aspects of the NDP frame 210, 300, 900, and 1000 of FIGs. 2, 3, 9, and 10. The NDP frame 1100 may also include an example of one or more aspects of the legacy portions 305 and 400 of FIGs. 3, 4, and 8 and an example of one or more aspects of the non-legacy portion 310, the non-legacy portions of the non-legacy and extension portions 500, the non-legacy portion 600, and the non-legacy portion 700 of FIGs. 3 and 5-10.

In the example of FIG. 11, the NDP frame 1100 spans an 80 MHz channel and includes four copies of a legacy preamble portion 305-d spread over four 20 MHz channels, with guard intervals in between. The legacy preamble portion 305-d may be repeated for each 20 MHz channel that is spanned by the NDP frame 1100.

The NDP frame 1100 includes a high efficiency portion 810-c that includes an all-station portion 1005-a and a per-station portion 1010-a. The all-station portion 1005-a and the per-station portion 1010-a may be examples of one or more aspects of the all-station portion 1005 and the per-station portion 1010 of FIG. 10. The high efficiency portion 810-c may be defined over the 80 MHz or a 20 MHz channel of the 80 MHz. In the example illustrated in FIG. 11, the all-station portion 1005-a includes the RL-SIG 505-b, which may be a repetition of the legacy preamble portion 305-d, an HE-SIG-A 510-b, and an HE-SIG-B 515-b repeated over each 20 MHz channel of the 80 MHz. In some examples, such as the example illustrated in FIG. 11, the HE-SIG-A 510-b and the HE-SIG-B 515-b are duplicated for each station, such as each channel. In other examples, the HE-SIG-A 510-b and the HE-SIG-B 515-b may be different for each station or channel. In some examples, the HE-SIG-A 510-b is duplicated every channel (*e.g*., 20 MHz), while the HE-SIG-B 515-b is duplicated or different for each channel (*e.g*., per each 20 MHz). If the HE-SIG-B 515-b portions are different for each station, the stations may determine what bandwidth to find the HE-SIG-B 515-b portions (or the per-station portions) from the HE-SIG-A 510-b or *a priori* from other signaling between the AP and the station or the station and another station.

The per-station portion 1010-a may include an HE-STF 520-g, an HE-LTF 525-g, and an extension portion 530-g for a first station. The per-station portion 1010-a may also include HE-STF 520-h through 520-l, HE-LTF 525-h through 525-l, and extension portion 530-h through 530-l, for a second station through a sixth station, respectively. The fields for each specific station in the per-station portion 1010-a span the bandwidth assigned to the particular station. The information contained in HE-STF 520-g through HE-STF 520-l may be different and individualized for their respective stations. Likewise, the information contained in HE-LTF 525-g through HE-LTF 525-l may be different and individualized for their respective stations. Similarly, the information contained in extension portion 530-g through extension portion 530-l may be different and individualized for their respective stations.

In some examples, the per-station portion 1010-a is not present in the NDP frame 1100. In other examples, some sub-set of the fields shown in FIG. 11 are included in the NDP frame 1100. The bandwidth or channel used to transmit an HE-SIG-B 515 may be the same or different than the bandwidth or channel used to transmit an extension portion 530 for a particular station. For example, an HE-SIG-B 515-b for a station may be transmitted over a first bandwidth. The next fields for that station, HE-STF 520-g and HE-LTF 250-g provide synchronization and channel estimation that informs the station to look to a different, second bandwidth for the extension portion 530-g. That is, the stations may use any frequencies as long as the stations know the channel estimation and synchronization for those frequencies. In some examples, a hierarchical framework may be used to signal stations of bandwidths where specific fields pertaining to a station may be found. For example, a station may learn from the HE-SIG-A 505-b which HE-SIG-2 510-b to look at. The station may then learn from the proper HE-SIG-2 510-b which HE-SIG-3 530 (e.g., HE-SIG-3 530-g) to look at.

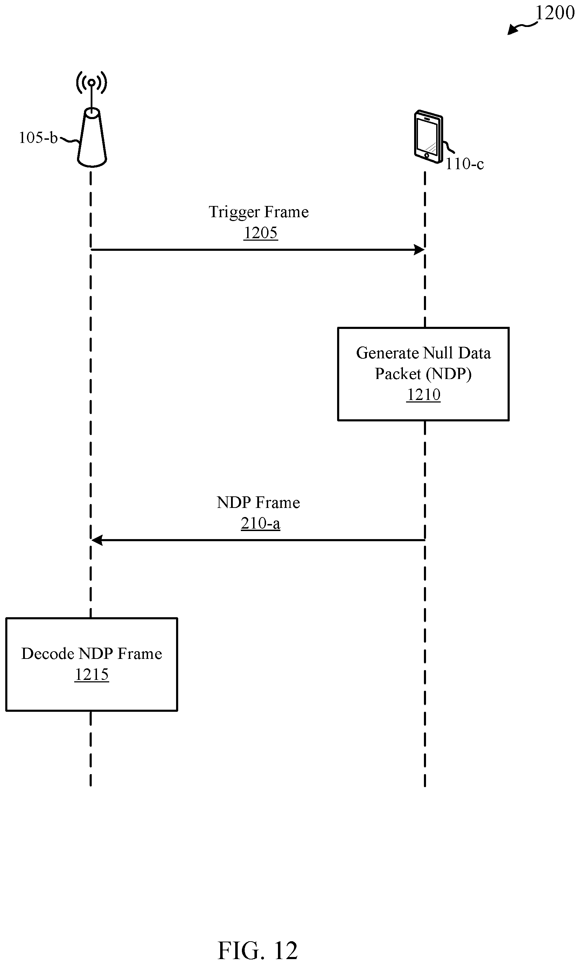

**FIG. 12** shows a flow diagram 1200 of an example NDP frame exchange in response to a trigger frame in a wireless communication system, in accordance with various aspects of the present disclosure. FIG. 12 illustrates a wireless station 110-c that receives a trigger frame 1205 from an AP 105-b, and, in response, sends an NDP frame 210-a to the AP 105-b. The AP 105-b may be an example of one or more aspects of the AP 105 described with reference to FIGs. 1 and 2. Similarly, the wireless station 110-c may be an example of one or more aspects of wireless stations 110 described with reference to FIGs. 1 and 2.

The AP 105-b sends a trigger frame 1205 to the wireless station 110-c. The trigger frame 1205 may trigger transmissions from multiple stations in uplink. Thus, an AP 105 may transmit the trigger frame 1205 to more than one wireless station 110. In response to receiving the trigger frame 1205, the wireless station 110-c may generate an NDP frame 210-a at block 1210. The trigger frame 1205 may already include parameters relevant to an NDP frame, such as the NDP structure, duration, and allocation of resources per station. Thus, for NDP frames that are sent as an immediate response to a trigger frame, such as the trigger frame 1205, the NDP frame 210-a may not have to repeat that information. Thus, and for example, the NDP frame 210-a may not include an HE-SIG-A or an HE-SIG-B portion. Additionally, the example in FIG. 12 is for an uplink NDP. That is, the wireless station 110-c sends an NDP frame 210-a to the AP 105-b. Because the wireless station 110-c sends the NDP frame 210-a to the AP 105-b, the NDP frame 210-a may not include control information.

The wireless station 110-c may transmit the NDP frame 210-a to the AP 105-b. The NDP frame 210-a may be an example of one or more aspects of the NDP frame 200, 300, 900, and 1000 of FIGs. 2, 3, 9, and 10. The AP 105-b may decode the NDP frame 210-a at block 1215.

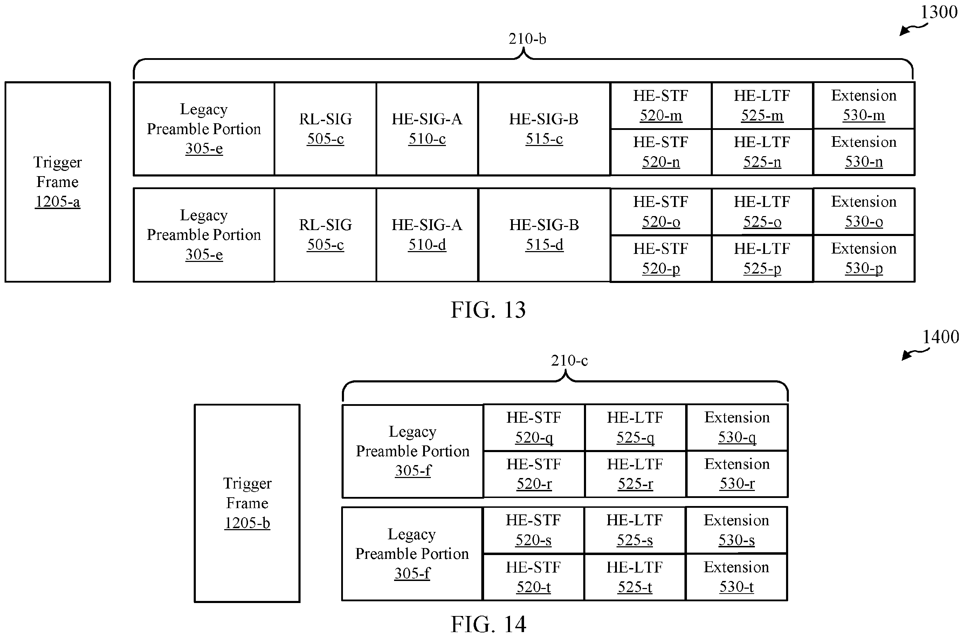

**FIG. 13** shows a block diagram 1300 of an example NDP frame 210-b transmitted in response to a trigger frame 1205-a, in accordance with various aspects of the present disclosure. The NDP frame 210-b may be an example of one or more aspects of the NDP frame 210, 300, 540, 590, 900, 1000, and 1100 of FIGs. 2, 3, 5B, 5C, and 9-12. The trigger frame 1205-b may be an example of one or more aspects of the trigger frame 1205 of FIGs. 12 and 13.

In response to receiving a trigger frame 1205-a, a number of stations may send an NDP frame. The representation of the NDP frame 210-b of FIG. 13 is a composite of four different NDP frames sent by the four responding stations. In addition to a legacy preamble portion 305-e, in this example, the stations respond including an RL-SIG 505-c, an HE-SIG-A 510-c and 510-d (which may be different or the same), and an HE-SIG-B 515-c and 515-d (which also may be different or the same). A first station may transmit the NDP frame including an HE-STF 520-m, an HE-LTF 525-m, and an extension portion 530-m. Likewise, a second station may transmit the NDP frame that includes an HE-STF 520-n, an HE-LTF 525-n, and an extension portion 530-n. A third station may transmit the NDP frame that includes an HE-STF 520-o, an HE-LTF 525-o, and an extension portion 530-o and a fourth station may transmit the NDP frame that includes an HE-STF 520-p, an HE-LTF 525-p, and an extension portion 530-p. In other examples, other numbers of stations besides four may receive the trigger frame 1205-a and respond to it.

**FIG. 14** shows a block diagram 1400 of an example NDP frame 210-c transmitted in response to a trigger frame 1205-b, in accordance with various aspects of the present disclosure. The NDP frame 210-c may be an example of one or more aspects of the NDP frame 210, 300, 540, 590, 900, 1000, and 1100 of FIGs. 2, 3, 5B, 5C, and 9-13. The trigger frame 1205-b may be an example of one or more aspects of the trigger frame 1205 of FIGs. 12 and 13.

In response to receiving the trigger frame 1205-b, a number of stations may send an NDP frame. The representation of the NDP frame 210-c of FIG. 14 is a composite of four different NDP frames sent by four stations responding to the trigger frame 1205-b. The stations respond including a legacy preamble portion 305-f and a per-station portion. For example, a first station may transmit the NDP frame including an HE-STF 520-q, an HE-LTF 525-q, and an extension portion 530-q. Likewise, a second station may transmit the NDP frame that includes an HE-STF 520-r, an HE-LTF 525-r, and an extension portion 530-r. A third station may transmit the NDP frame that includes an HE-STF 520-s, an HE-LTF 525-s, and an extension portion 530-s and a fourth station may transmit the NDP frame that includes an HE-STF 520-t, an HE-LTF 525-t, and an extension portion 530-t. The per-station portion for each station may be different for different stations, and may be transmitted in different spatial streams or on different frequencies.

In other examples, other numbers of stations besides four may receive and respond to the trigger frame 1205-b. In this example, a response to the trigger frame may not have an HE-SIG-A or an HE-SIG-B. In some examples, some stations respond with an HE-SIG-A or an HE-SIG-B and some stations do not.

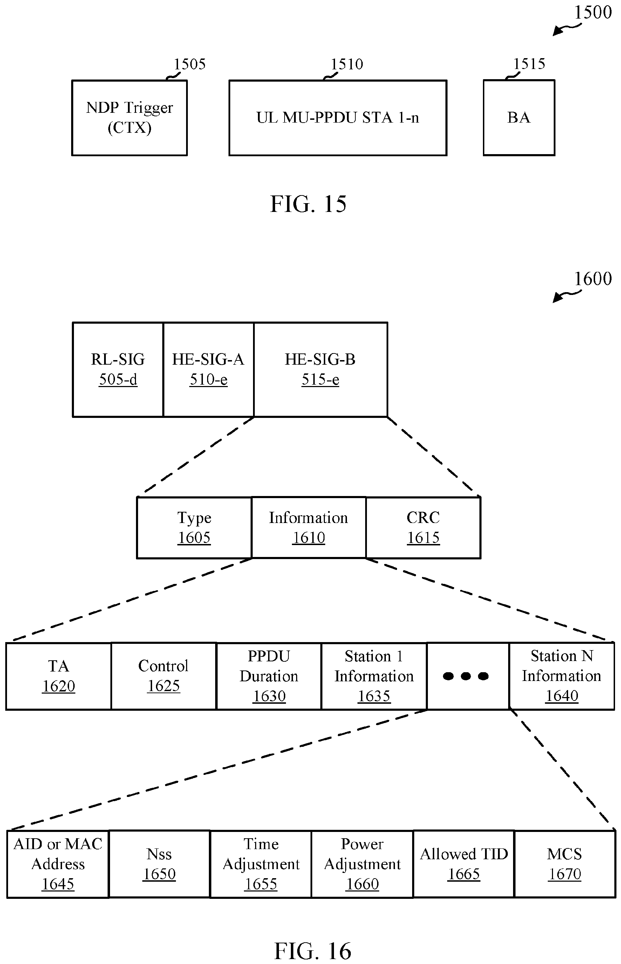

**FIG. 15** shows a block diagram of an example NDP clear to transmit (CTX) frame, in accordance with various aspects of the present disclosure. An AP 105 may transmit a clear to transmit (CTX) message 1505, which may take the form of an NDP trigger. The AP 105 may broadcast the CTX message 1505 to one or more wireless stations 110 that indicates which stations may participate in an uplink multiple-user MIMO or a multi-user orthogonal frequency division multiple access (OFDMA) scheme such as a UL MU-PPDU scheme. Once a station receives the CTX message 1505, the station may transmit a UL MU-PPDU message 1510. The UL MU-PPDU message 1510 may be an NDP frame, which may be an example of one or more aspects of the NDP frame 210, 300, 900, 1000, and 1100 of FIGs. 2, 3, and 9-14.

Upon receiving the UL MU-PPDU message 1510, the AP may transmit a block acknowledgment (BA) 1515 to the station. In some examples, the CTX message 1505 is transmitted to multiple stations, the multiple stations may transmit back different UL MU-PPDU messages 1510, and the AP may transmit BAs 1515 to the multiple stations.

The UL MU-PPDU message 1510 may include an HE-SIG-A field and an HE-SIG-B field. The HE-SIG-A and HE-SIG-B fields may include CTX information. In some examples, the UL MU-PPDU message 1510 may include an extension field. The extension field may carry trigger information. In other examples, the message 1510 may be a UL OFDMA message.

**FIG. 16** shows a block diagram of example NDP frame 1600 with a broadcast CTX, in accordance with various aspects of the present disclosure. The NDP frame 1600 may be an example of one or more aspects of the NDP frame 210, 300, 900, 1000, and 1100 of FIGs. 2, 3, and 9-14 or an example of one or more aspects of the UL MU-PPDU message 1510 of FIG. 15. The NDP frame 1600 may include an RL-SIG 505-d, an HE-SIG-A 510-e, and an HE-SIG-B 515-e. Although the NDP frame 1600 only illustrates a non-legacy portion, a legacy portion proceeding the non-legacy portion may be included.

The HE-SIG-A 510-e and the HE-SIG-B 515-e may have several fields. For simplicity, the example of FIG. 16 illustrates the HE-SIG-B 515-e including a type field 1605, an information field 1610, and a cyclic redundancy check (CRC) field 1615. In other examples, the HE-SIG-A 510-e may include these fields. The type field 1605 may describe the type of frame or the function of the frame. In one example, the type field 1605 is 4 bits. The CRC field 1615 indicates information related to a cyclic redundancy check. In particular, the CRC field 1615 may include 16 bits that force a checksum to a known constant in order to check for transmission errors. In other examples, other fields and bit lengths may be used.

The information field 1610 may further include additional fields, including a transmitter address (TA) field 1620, a control (CTRL) field 1625, a PPDU duration field 1630, and multiple station information fields 1635 and 1640. In this example, the HE-SIG-B 515-e includes N station information fields, station 1 information field 1635 through station N information field 1640. A station information field may include additional sub-fields.

The TA field 1620 may indicate a transmitter address or a basic service set identifier (BSSID). The CTRL field 1625 may be a generic field that may include information relating to a format of the remaining portion of the NDP frame, indication of rate adaptations, indication of allowed traffic identifier (TID), and an indication that a clear-to-send messages must be sent responsive to the NDP frame 1600. For example, the CTRL field 1625 may include a number of station information fields present and whether any sub-fields are included in the station information fields. The CTRL field 1625 may also include additional control information.

Each station information field may include a per-station set of information. Sub-fields of a station information field may include an association identifier (AID) or MAC address field 1645, a number of spatial streams (Nss) field 1650, a time adjustment field 1655, a power adjustment field 1660, an allowed TID field 1665, and a modulation and coding scheme (MCS) field 1670. The AID or MAC address field 1645 may identify a number of stations. The Nss field 1650 may indicate a number of spatial streams a station may use in a UL MU-MIMO system. The time adjustment field 1655 may indicate a time that a station should adjust its transmission compared to the reception of a trigger frame (e.g., an NDP CTX trigger frame). The power adjustment field 1660 may indicate a power backoff a station should take from a declared transmit power. The allowed TID field 1665 may indicate an allowed traffic identifier. The MCS field 1670 may indicate the modulation and coding scheme the station should use.

In some examples, not all of the described sub-fields are included in the HE-SIG-B 515-e for an NDP frame with a broadcast CTX. In some examples, for each channel (e.g., a 20 MHz channel), the trigger information may refer to a different group of stations. A per-station portion may or may not be included in an NDP frame with a broadcast CTX.

In an example of an NDP frame for multiple user unicast CTX, the information described being included in the HE-SIG-B 515-e may be located in an extension for each different station. In such an example, the information field 1610 may include only a single station information field.

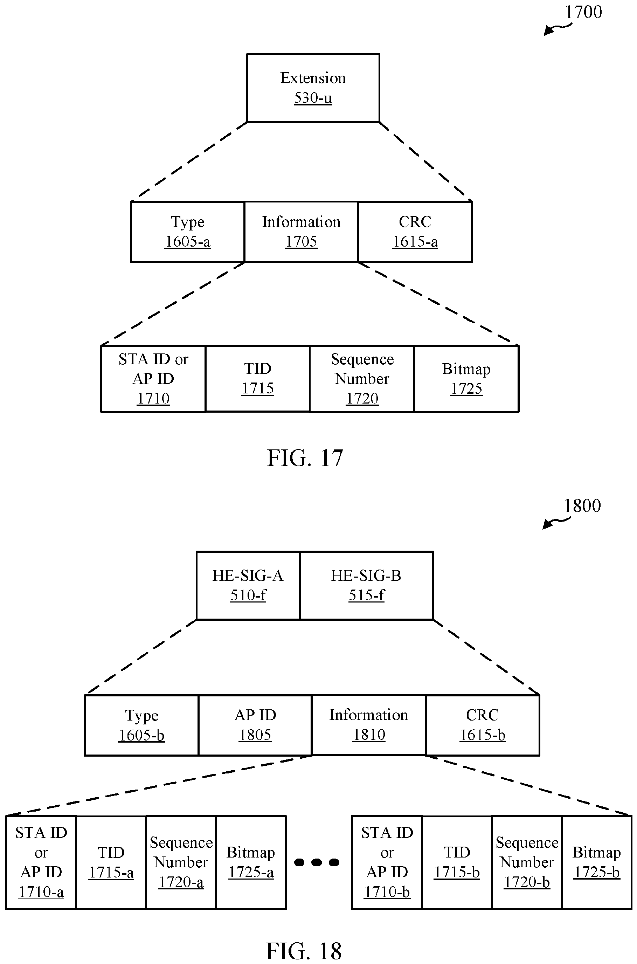

**FIG. 17** shows a block diagram of an example NDP frame 1700 including block ACK/ACK information in an extension field 530-u, in accordance with various aspects of the present disclosure. The NDP frame 1700 may be an example of one or more aspects of the NDP frame 210, 300, 540, 590, 900, 1000, 1100, and 1600 of FIGs. 2, 3, 5B, 5C, 9-14, and 16 or an example of one or more aspects of the UL MU-PPDU message 1510 of FIG. 15. The NDP frame 1700 may be used for block acknowledgment. This example may be used for individual stations.

Although FIG. 17 only shows the NDP frame 1700 including the extension field 530-u, the NDP frame 1700 may include any of the fields discussed herein. The extension portion 5 extension portion 530-u may include a type field 1605-a, an information field 1705, and a CRC field 1615-a. The type field 1605-a and the CRC field 1615-a may be an example of one or more aspects of the type field 1605 and the CRC field 1615 of FIG. 16.

The information field 1705 may further include a station ID or AP ID field 1710, a TID field 1715, a sequence number field 1720, and a bitmap field 1725. The station ID or AP ID field 1710 may identify the station or AP. The TID field 1715 may indicate an access category (AC) for which the station or AP has data. The sequence number field 1720 acts as a modulo-counter for higher-level frames. The bitmap field 1725 may include bits for acknowledging or not acknowledging frames.

**FIG. 18** shows a block diagram of an example NDP frame 1800 including block ACK/ACK information in an HE-SIG-A field 510-f and an HE-SIG-B field 515-f, in accordance with various aspects of the present disclosure. The NDP frame 1800 may be an example of one or more aspects of the NDP frame 210, 300, 900, 1000, 1100, and 1600 of FIGs. 2, 3, 9-14, and 16 or an example of one or more aspects of the UL MU-PPDU message 1510 of FIG. 15. The NDP frame 1800 may be used for block acknowledgment.

Although FIG. 18 only shows the NDP frame 1800 including the HE-SIG-A field 510-f and an HE-SIG-B field 515-f, the NDP frame 1800 may include any of the fields discussed herein. The HE-SIG-A field 510-f and an HE-SIG-B field 515-f may include a type field 1605-b, an AP ID field 1805, an information field 1810, and a CRC field 1615-b. The type field 1605-b and the CRC field 1615-b may be an example of one or more aspects of the type field 1605 and the CRC field 1615 of FIGs. 16 and 17.

The AP ID field 1805 may identify an AP. The information field 1810 may further include a station ID or AP ID field 1710-a, a TID field 1715-a, a sequence number field 1720-a, and a bitmap field 1725-a. The information field 1810 may also include a station ID or AP ID field 1710-b, a TID field 1715-b, a sequence number field 1720-b, and a bitmap field 1725-b. In other examples, the information field 1810 may include additional sets of fields for multiple stations. The station ID or AP ID field 1710-a, the TID field 1715-a, the sequence number field 1720-a, and the bitmap field 1725-a may be an example of one or more aspects of station ID or AP ID field 1710, the TID field 1715, the sequence number field 1720, and the bitmap field 1725 of FIG. 17. Likewise, the station ID or AP ID field 1710-b, the TID field 1715-b, the sequence number field 1720-b, and the bitmap field 1725-b may be an example of one or more aspects of station ID or AP ID field 1710, the TID field 1715, the sequence number field 1720, and the bitmap field 1725 of FIG. 17.

As described herein, the NDP frame 1800 may be an NDP block ACK that includes a block ACK bitmap with information per each station in the "per-station" portion of the NDP frame 1800. In some examples, the bitmap is present for a block ACK and may not be present for an ACK. The block ACK (BA) information sent to each station may be a self-contained frame. That is, the BA information may include a frame type identifier, a source address, or a destination address.

In some examples, the NDP block ACK may be an approximately immediate response to an MU data PPDU or to a trigger frame, such as a multi-station BAR, which may indicate the structure of the NDP BA response and the allocation of the NDP fields to different stations. Such a frame may be a short interframe space (SIFS) immediate response. In this case, the NDP block ACK may not need to include certain information in the BA, such as station and AP ID or type. In some examples, bandwidth or streams per station may be allocated based on the stations' resource allocation for the soliciting PPDU. For example, the stations may use the same bandwidth or streams as the soliciting PPDU or use equal bandwidth allocation according to a number of stations identified in the soliciting PPDU. In some examples, as the NDP block ACK may be an immediate response, the recipient is already well identified and the type of information carried by the NDP may already be known by the recipient of the NDP.

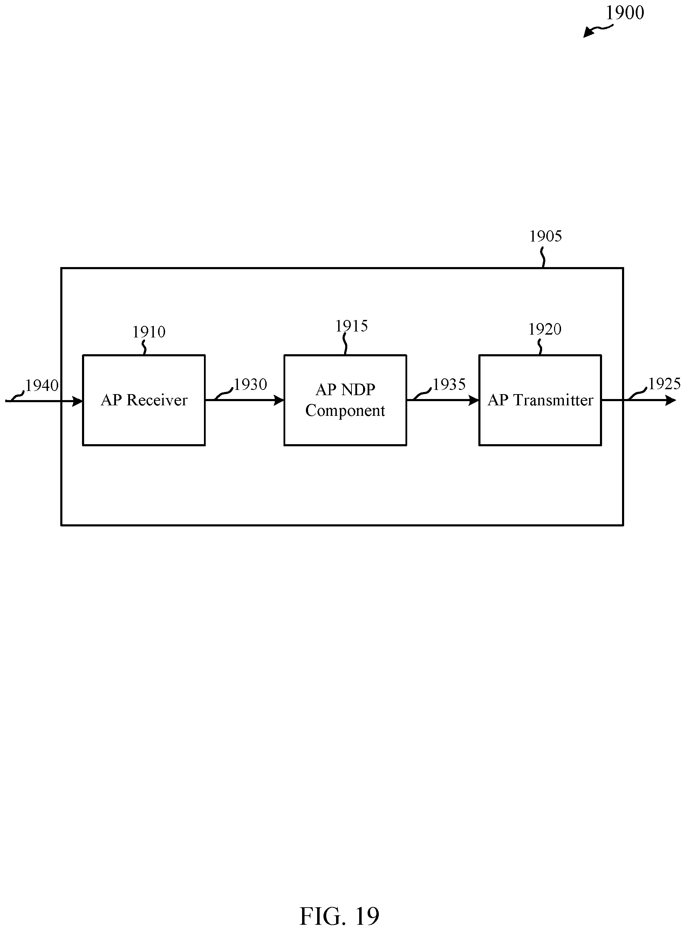

**FIG. 19** shows a block diagram 1900 of a device 1905 configured for use in an AP for wireless communication, in accordance with various aspects of the present disclosure. The device 1905 may be an example of one or more aspects of the APs 105 described with reference to FIGs. 1, 2, and 12. The device 1905 may include an AP receiver 1910, an AP NDP component 1915, and/or an AP transmitter 1920. The device 1905 may also be or include a processor. Each of these components may be in communication with each other.

The device 1905, through the AP receiver 1910, the AP NDP component 1915, and/or the AP transmitter 1920, may be configured to perform functions described herein. For example, the device 1905 may be configured to generate and decode NDP frames.

The components of the device 1905 may, individually or collectively, be implemented using one or more application-specific integrated circuits (ASICs) adapted to perform some or all of the applicable functions in hardware. Alternatively, the functions may be performed by one or more other processing units (or cores), on one or more integrated circuits. In other examples, other types of integrated circuits may be used (*e.g*., Structured/Platform ASICs, Field Programmable Gate Arrays (FPGAs), and other Semi-Custom ICs), which may be programmed in any manner known in the art. The functions of each component may also be implemented, in whole or in part, with instructions embodied in a memory, formatted to be executed by one or more general or application-specific processors.

The AP receiver 1910 may receive a signal 1940 which may include information such as packets, user data, and/or control information associated with various information channels (*e.g*., control channels, data channels, *etc*.). In some examples, the signal 1940 is an NDP frame. The AP receiver 1910 may be configured to receive NDP frames. Information signal 1930 may be passed on to the AP NDP component 1915, and to other components of the device 1905.

The AP NDP component 1915 may generate NDP frames using structures described herein. The AP NDP component 1915 may encode NDP frames to be transmitted or decode received NDP frames.

The AP transmitter 1920 may transmit the one or more signals 1935 received from other components of the device 1905. The AP transmitter 1920 may transmit NDP frames, including NDP CTX trigger frames and NDP block ACK/ACK frames as one or more signals 1925. In some examples, the AP transmitter 1920 may be collocated with the AP receiver 1910 in a transceiver component.

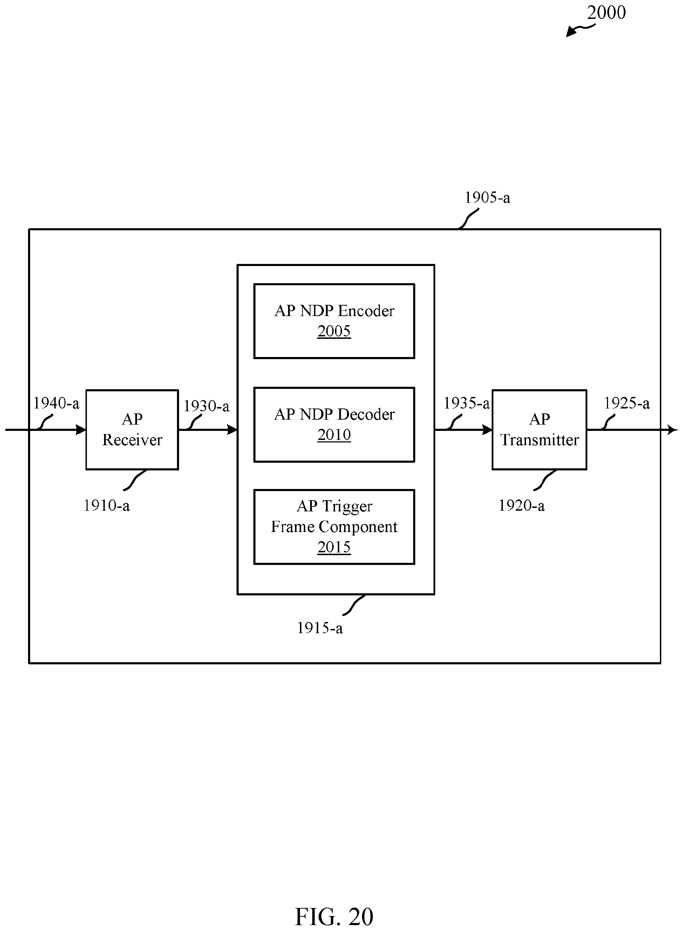

**FIG. 20** shows a block diagram 2000 of a device 1905-a that is used in an AP for wireless communication, in accordance with various aspects of the present disclosure. The device 1905-a may be an example of one or more aspects of the APs 105 described with reference to FIGs. 1, 2, and 12. It may also be an example of a device 1905 described with reference to FIG. 19. The device 1905-a may include an AP receiver 1910-a, an AP NDP component 1915-a, and/or an AP transmitter 1920-a, which may be examples of the corresponding components of device 1905. The device 1905-a may also include a processor. Each of these components may be in communication with each other. The AP NDP component 1915-a may include an AP NDP encoder 2005, an AP NDP decoder 2010, and an AP trigger frame component 2015.

The AP receiver 1910-a and the AP transmitter 1920-a may perform the functions of the AP receiver 1910 and the AP transmitter 1920, of FIG. 19, respectively. The AP receiver 1910-a may receive one or more signals 1940-a and provide one or more signals 1930-a to the AP NDP component 1915-a. The AP NDP component 1915-a may provide one or more signals 1935-a, such as an NDP frame, to the AP transmitter 1920-a, which may then transmit one or more signals 1925-a, which may be based on the signals 1935-a. The signals 1940-a, 1930-a, 1935-a, and 1925-a may be examples of one or more aspects of the signals 1940, 1930, 1935, and 1925 described with reference to FIG. 19.

The AP NDP encoder 2005 may generate NDP frames for one or more stations, according to methods and structures described herein. The AP trigger frame component 2015 may aid in the generation of an NDP CTX frame. The AP trigger frame component 2015 may also generate other trigger frames. The AP NDP decoder 2010 may decode and interpret received NDP frames.

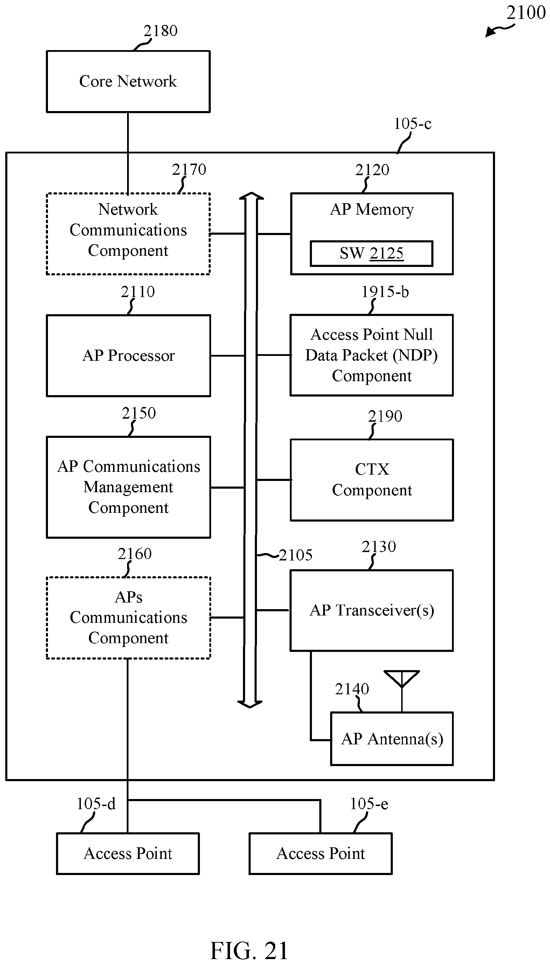

Turning to **FIG. 21**, a diagram 2100 is shown that illustrates an AP 105-c configured for generating and decoding NDP frames. In some aspects, the AP 105-c may be an example of the APs 105 of FIGs. 1, 2, and 12. The AP 105-c may include an AP processor 2110, an AP memory 2120, an AP transceiver(s) 2130, AP antennas 2140, and an AP NDP component 1915-b. The AP NDP component 1915-b may be an example of the AP NDP component 1915 of FIGs. 19 and 20. In some examples, the AP 105-c may include a CTX Component 2190. In some examples, the AP 105-c may also include one or both of an APs communications component 2160 and a network communications component 2170. Each of these components may be in communication with each other, directly or indirectly, over at least one bus 2105.

The AP memory 2120 may include random access memory (RAM) and read-only memory (ROM). The AP memory 2120 may also store computer-readable, computer-executable software (SW) code 2125 containing instructions that are configured to, when executed, cause the AP processor 2110 to perform various functions described herein for encoding and decoding NDP frames, for example. Alternatively, the software code 2125 may not be directly executable by the AP processor 2110 but be configured to cause the computer, *e.g*., when compiled and executed, to perform functions described herein.

The AP processor 2110 may include an intelligent hardware device, *e.g*., a central processing unit (CPU), a microcontroller, an ASIC, *etc.* The AP processor 2110 may process information received through the AP transceiver(s) 2130, the APs communications component 2160, and/or the network communications component 2170. The AP processor 2110 may also process information to be sent to the AP transceiver(s) 2130 for transmission through the AP antennas 2140, to the APs communications component 2160, and/or to the network communications component 2170. The AP processor 2110 may handle, alone or in connection with the AP NDP component 1915-b, various aspects related to NDP frames.

The AP transceiver(s) 2130 may include a modem configured to modulate the packets and provide the modulated packets to the AP antennas 2140 for transmission, and to demodulate packets received from the AP antennas 2140. The AP transceiver(s) 2130 may be implemented as at least one transmitter component and at least one separate receiver component. The AP transceiver(s) 2130 may be configured to communicate bi-directionally, via the AP antennas 2140, with at least one wireless station 110 as illustrated in FIGS. 1, 2, and 12, for example. The AP 105-c may typically include multiple AP antennas 2140 (*e.g*., an antenna array). The AP 105-c may communicate with a core network 2180 through the network communications component 2170. The AP 105-c may communicate with other APs, such as the AP 105-d and the AP 105-e, using an APs communications component 2160.

According to the architecture of FIG. 21, the AP 105-c may further include an AP communications management component 2150. The AP communications management component 2150 may manage communications with stations and/or other devices as illustrated in the WLAN 100 of FIG. 1. The AP communications management component 2150 may be in communication with some or all of the other components of the AP 105-c via the bus or buses 2105. Alternatively, functionality of the AP communications management component 2150 may be implemented as a component of the AP transceiver(s) 2130, as a computer program product, and/or as at least one controller element of the AP processor 2110.

According to the architecture of Fig. 21, the AP 105-c may further include a CTX component 2190. The CTX component 2190 may manage the transmission of a CTX message 1505, which may take the form of an NDP trigger. The CTX component 2190 may manage the broadcast of the CTX message 1505 to one or more wireless stations 110 that indicates which stations may participate in an uplink multiple-user MIMO or a multi-user orthogonal frequency division multiple access (OFDMA) scheme such as a UL MU-PPDU scheme.

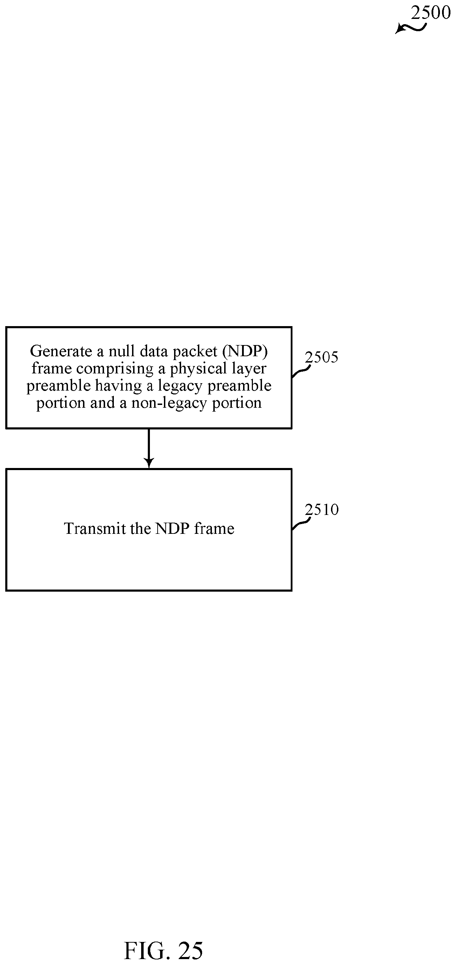

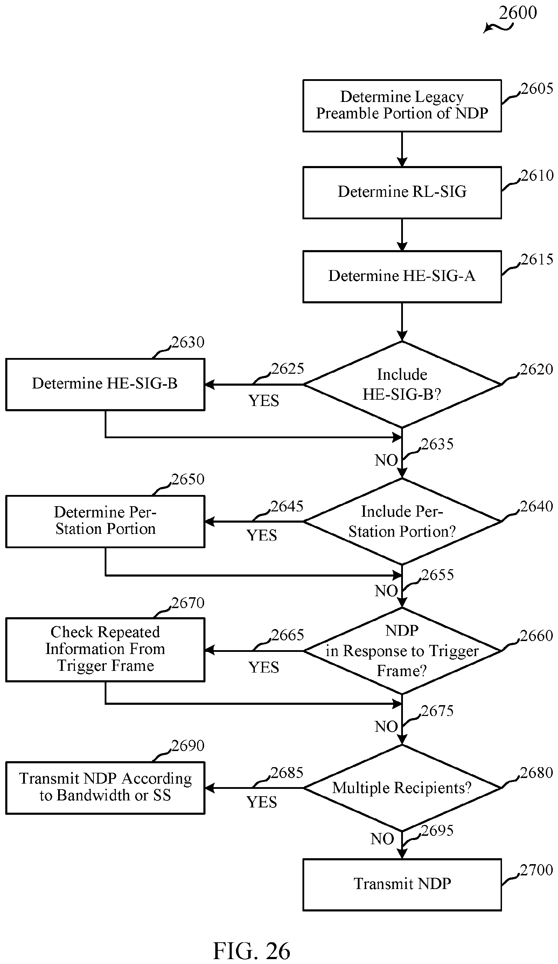

The components of the AP 105-c may be configured to implement aspects discussed above with respect FIGs. 1-20, and those aspects may not be repeated here for the sake of brevity. Moreover, the components of the AP 105-c may be configured to implement aspects discussed below with respect to FIGs. 25 and 26 and those aspects may not be repeated here also for the sake of brevity.

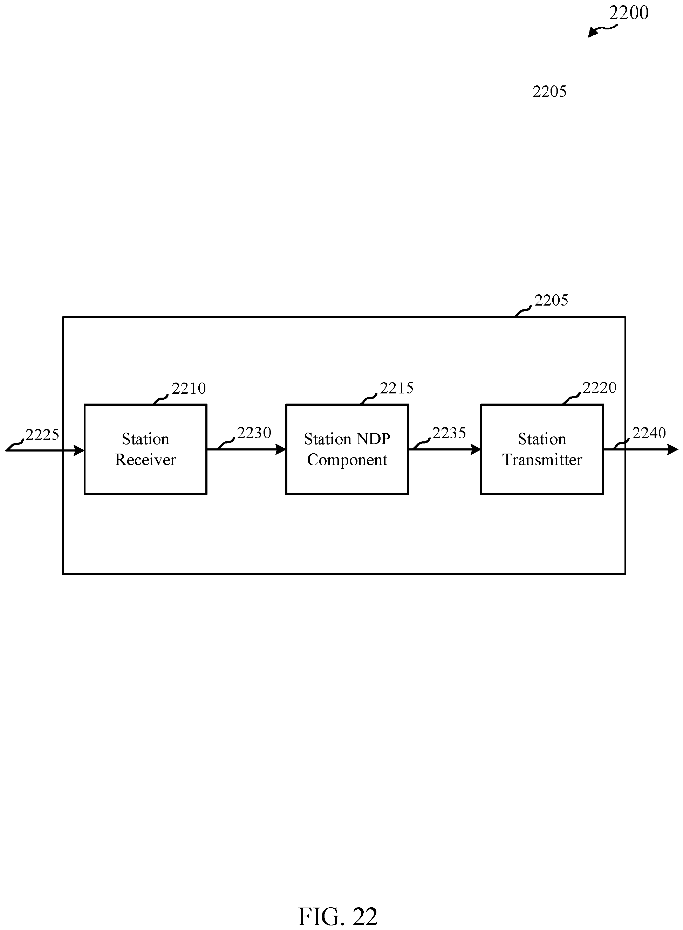

**FIG. 22** shows a block diagram 2200 of an apparatus 2205 for use in a station for wireless communication, in accordance with various aspects of the present disclosure. In some examples, the apparatus 2205 may be an example of aspects of one or more of the wireless stations 110 described with reference to FIGs. 1, 2, and 12. The apparatus 2205 may also be or include a processor. The apparatus 2205 may include a station receiver 2210, a station NDP component 2215, and/or a station transmitter 2220. Each of these components may be in communication with each other.

The apparatus 2205, through the station receiver 2210, the station NDP component 2215, and/or the station transmitter 2220, may be configured to perform functions described herein. For example, the apparatus 2205 may be configured to generate and interpret NDP frames.

The components of the apparatus 2205 may, individually or collectively, be implemented using one or more ASICs adapted to perform some or all of the applicable functions in hardware. Alternatively, the functions may be performed by one or more other processing units (or cores), on one or more integrated circuits. In other examples, other types of integrated circuits may be used (*e.g*., Structured/Platform ASICs, FPGAs, and other Semi-Custom ICs), which may be programmed in any manner known in the art. The functions of each component may also be implemented, in whole or in part, with instructions embodied in a memory, formatted to be executed by one or more general or application-specific processors.

The station receiver 2210 may receive information such as packets, user data, and/or control information associated with various information channels (*e.g*., control channels, data channels, *etc*.). The station receiver 2210 may be configured to receive one or more signals 2225 that may be NDP frames. Information, such as received NDP frames, may be passed on to the station NDP component 2215, and to other components of the device 2205.

The station NDP component 2215 may receive one or more signals 2230 from the station receiver 2210. The one or more signals 2230 may relate to NDP frames received at the apparatus 2205. The station NDP component 2215 may interpret (e.g., decode) any received NDP frames. The station NDP component 2215 may also generate NDP frames. In one example, the one or more signals 2230 is an NDP CTX frame, to which the station NDP component 2215 responds by generating an NDP frame. The station NDP component 2215 may provide one or more signals 2235, which may relate to or be an NDP frame, to the station transmitter 2220.

The station transmitter 2220 may transmit the one or more signals 2235 received from other components of the apparatus 2205. The station transmitter 2220 may transmit one or more signals 2240, which may be NDP frames or other signals. In some examples, the station transmitter 2220 may be collocated with the station receiver 2210 in a transceiver component. The station transmitter 2220 may include a single antenna, or it may include a plurality of antennas.

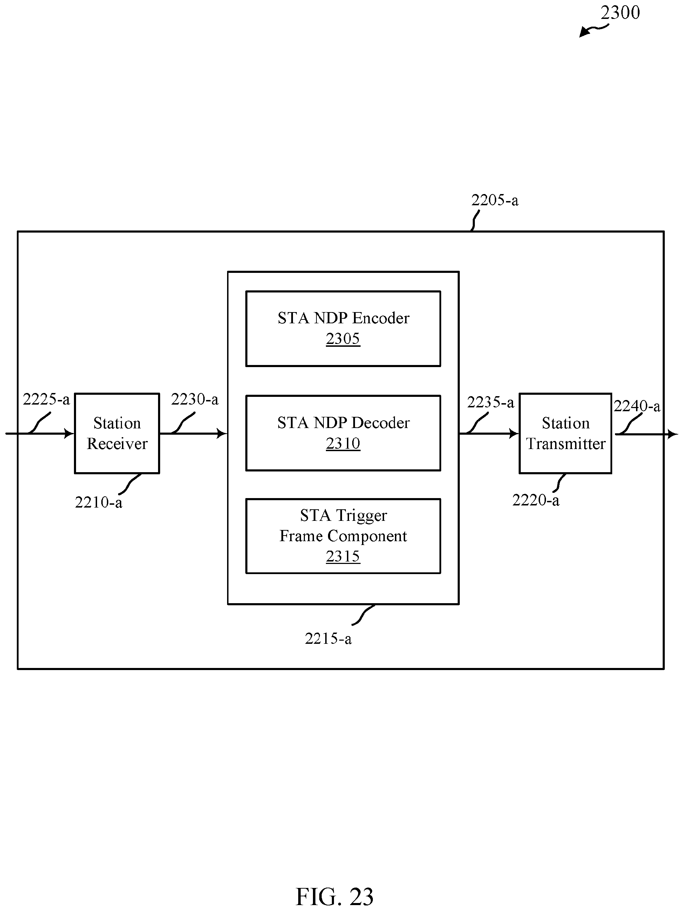

**FIG. 23** shows a block diagram 2300 of an apparatus 2205-a that is used in a wireless station for wireless communication, in accordance with various examples. The apparatus 2205-a may be an example of one or more aspects of a wireless station 110 described with reference to FIGs. 1, 2, and 12. It may also be an example of an apparatus 2205 described with reference to FIG. 22. The apparatus 2205-a may include a station receiver 2210-a, a station NDP component 2215-a, and/or a station transmitter 2220-a, which may be examples of the corresponding components of apparatus 2205. The apparatus 2205-a may also include a processor. Each of these components may be in communication with each other. The station NDP component 2215-a may include a station NDP encoder 2305, a station NDP decoder 2310, and a station trigger frame component 2315.

The station receiver 2210-a and the station transmitter 2220-a may perform the functions of the station receiver 2210 and the station transmitter 2220, of FIG. 22, respectively. The station receiver 2210-a may receive one or more signals 2225-a and provide one or more signals 2230-a to the station NDP component 2215-a. The station NDP component 2215-a may provide one or more signals 2235-a, such as an NDP frame, to the station transmitter 2220-a, which may then transmit one or more signals 2240-a, which may be based on the signals 2235-a. The signals 2225-a, 2230-a, 2235-a, and 2240-a may be examples of one or more aspects of the signals 2225, 2230, 2235, and 2240 described with reference to FIG. 22.

The station NDP encoder 2305 may generate NDP frames for one or more APs, according to methods and structures described herein. The station trigger frame component 2315 may aid in the response to an NDP CTX frame. The AP NDP decoder 2310 may decode and interpret received NDP frames.

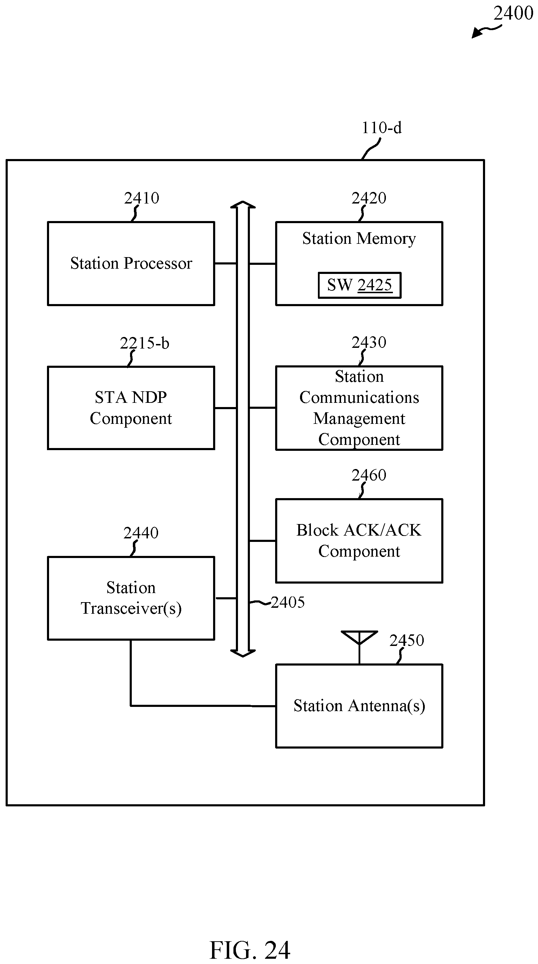

Turning to **FIG. 24**, a diagram 2400 is shown that illustrates a wireless station 110-d configured for generating and interpreting NDP frames. The wireless station 110-d may have various other configurations and may be included or be part of a personal computer (*e.g.,* laptop computer, netbook computer, tablet computer, *etc*.), a cellular telephone, a PDA, a digital video recorder (DVR), an internet appliance, a gaming console, an e-readers, and the like. The wireless station 110-d may have an internal power supply, such as a small battery, to facilitate mobile operation. The wireless station 110-d may be an example of the wireless stations 110 of FIGs. 1, 2, and 12.

The wireless station 110-a may include a station processor 2410, a station memory 2420, a station transceiver 2440, station antennas 2450, and a station NDP component 2215-b. The station NDP component 2215-b may be an example of the station NDP component 2215 of FIGs. 22 and 23. Each of these components may be in communication with each other, directly or indirectly, over at least one bus 2405.

The station memory 2420 may include RAM and ROM. The station memory 2420 may store computer-readable, computer-executable software (SW) code 2425 containing instructions that are configured to, when executed, cause the station processor 2410 to perform various functions described herein for generating and interpreting NDP frames. Alternatively, the software code 2425 may not be directly executable by the station processor 2410 but be configured to cause the computer (*e.g*., when compiled and executed) to perform functions described herein.

The station processor 2410 may include an intelligent hardware device, *e.g*., a CPU, a microcontroller, an ASIC, and the like. The station processor 2410 may process information received through the station transceiver 2440 and/or to be sent to the station transceiver 2440 for transmission through the station antennas 2450. The station processor 2410 may handle, alone or in connection with the station NDP component 2215-b, various aspects of NDP frames.

The station transceiver 2440 may be configured to communicate bi-directionally with APs 105 in FIGs. 1, 2, 12, and 21. The station transceiver 2440 may be implemented as at least one transmitter component and at least one separate receiver component. The station transceiver 2440 may include a modem configured to modulate the packets and provide the modulated packets to the station antennas 2450 for transmission, and to demodulate packets received from the station antennas 2450. While the wireless station 110-d may include a single antenna, there may be aspects in which the wireless station 110-d may include multiple station antennas 2450.

According to the architecture of FIG. 24, the wireless station 110-d may further include a station communications management component 2430. The station communications management component 2430 may manage communications with various APs. The station communications management component 2430 may be a component of the wireless station 110-d in communication with some or all of the other components of the wireless station 110-d over the at least one bus 2405. Alternatively, functionality of the station communications management component 2430 may be implemented as a component of the station transceiver 2440, as a computer program product, and/or as at least one controller element of the station processor 2410.

The wireless station 110-d may also include a block ACK/ACK component 2460 that may assist the station NDP component 2215-b in creating a bitmap for an NDP block acknowledgment.

The components of the wireless station 110-d may be configured to implement aspects discussed above with respect to FIGs. 1-18, 22, and 23, and those aspects may not be repeated here for the sake of brevity. Moreover, the components of the wireless station 110-a may be configured to implement aspects discussed below with respect to FIGs. 25 and 26, and those aspects may not be repeated here also for the sake of brevity.

**FIG. 25** is a flow chart illustrating an example of a method 2500 for wireless communication, in accordance with various aspects of the present disclosure. The variants of method 2500 that do not include the generation of an extension portion do not fall within the scope of independent claim 1. For clarity, the method 2500 is described below with reference to aspects of one or more of the APs 105 or wireless stations 110 described with reference to FIGs. 1, 2, 12, 21, and 24, and/or aspects of one or more of the devices 1905 or apparatuses 2205 described with reference to FIGs. 19, 20, 22, and 23. In some examples, an AP 105 or wireless station 110 may execute one or more sets of codes to control the functional elements of the AP 105 or wireless station 110 to perform the functions described below. Additionally or alternatively, the AP 105 or wireless station 110 may perform one or more of the functions described below using general-purpose or special-purpose hardware.

At block 2505, the method 2500 may include generating an NDP frame comprising a physical layer preamble having a legacy preamble portion and a non-legacy portion. The NDP frame may be generating having any of the structures described herein. The operation(s) at block 2505 may be performed using the AP NDP component 1915 or the station NDP component 2215 described with reference to FIGs. 19-24.

The NDP frame may be generated to include control information. In such an example, the method 2500 further includes determining control information for at least one wireless station and includes the control information in the NDP frame. That is, an NDP frame may be used to carry control or management signaling. The control information may be included in one of a first HE signal field (HE-SIG-A), a second HE signal field (HE-SIG-B), or a third HE signal field (extension). The control or management information may include one field that indicates a type of information included in a HE-SIG field.

The NDP may perform functionalities and carry information same or similar to existing MAC frames. Information may be broadcast or unicast, and hence may be in HE-SIG-A, HE-SIG-B, or in HE-SIG 3. Such information may include an ACK/BA, trigger frame, probe request or response, queue stations feedback, short beacon, power control signaling, or typing adjustment signaling. In some examples, the following information may be included regardless of the type of NDP, including a transmitter identifier or partial identifier, a portion of a MAC address, a portion of an AID, an identifier of a basic service set, a portion of the BSSID address, transmit power, and a partial timing synchronization function (TSF).

In an example of the method 2500, generating the NDP frame further includes generating the legacy portion to include one or more of a legacy short training field (L-STF), a legacy long training field (L-LTF), or a legacy signal field (L-SIG).

In some examples, the non-legacy portion and the extension portion are high efficiency HE portions. The HE portion may have any of the structures and sub-frames described herein. In some examples of the method 2500, generating the NDP frame includes generating the non-legacy portion to include one or more of a repetition legacy signal (RL-SIG) field, an HE-SIG-A, an HE-SIG-B, an HE short training field (HE-STF), an HE long training field (HE-LTF), or an extension portion.

In some examples, generating the non-legacy portion further includes generating the RL-SIG field to include at least some of a same content as the legacy preamble portion. In some examples, generating the non-legacy portion also includes generating the HE-SIG-A to include information related to a format of a physical layer convergence protocol (PLCP) protocol data unit (PLDU).

Generating the non-legacy portion may also include generating the HE-SIG-B to include at least one of an operational indication or information related to a format of the NDP. The operational indication or information may inform a recipient (e.g., a recipient station) whether the frame is a regular PPDU frame with a payload or an NDP. The operational indication or information may also inform the recipient as to what structure the NDP has in cases where more than one structure of NDP is allowed. The operational indication or information may be provided by one or more of an indication in HE-SIG-A or HE-SIG-B (e.g., one or more bits), an L-SIG duration field, or an indication in extension. In another example, the recipient may interpret that the received frame is an NDP frame based on detecting a phase of the repeated L-SIG.

In another example, generating the NDP frame further includes generating an indicator that identifies a length of the HE-SIG-B. The HE-SIG-A may include the indicator. In some examples, one or more of the HE-SIG-A or the HE-SIG-B comprises decoding information. Signaling for the decoding of the NDP may be included in one or more of HE-SIG-A or HE-SIG-B. The decoding information may include a length of the NDP (in examples where the length of the NDP may be variable, a length of the HE-SIG-B field, a modulation and coding scheme of the HE-SIG-B, a total bandwidth of the NDP, or subchannel or stream allocations of each per-station section to a certain recipient station. Each SIG field may also include a CRC field to verify the integrity of the information.

At block 2510, the method 2500 may include transmitting the NDP frame. The operation(s) at block 2510 may be performed using the AP transmitter 1920, the transceivers 2130, the station transmitter 2220, or the transceivers 2130 described with reference to FIGs. 19-24. In some examples, transmitting the NDP frame further includes broadcasting the HE-SIG-A and the HE-SIG-B, wherein the HE-SIG-A and the HE-SIG-B comprise information for two or more stations. In another example, transmitting the NDP frame further includes transmitting the NDP to a plurality of recipient stations and unicasting at least one of the HE-STF, HE-LTF, or extension, wherein the HE portion comprises a different HE-STF, HE-LTF, or extension for each of the recipient stations. In some examples, unicasting further includes transmitting the at least one of the HE-STF, HE-LTF, or extension on one of a unique sub-band for each recipient station or a unique spatial stream for each recipient station.

In some examples, transmitting the NDP frame further includes transmitting a plurality of legacy preamble portions, one legacy preamble portion for each 20 megahertz (MHz) channel of a bandwidth comprising two or more 20 MHz channels. The non-legacy portion may be transmitted across the two or more 20 MHz channels.

Another example of the method 2500 includes receiving a trigger frame. Transmitting the NDP frame may be in response to the received trigger frame.

In some examples, generating the non-legacy portion consists of generating one or more of an HE-STF, an HE-LTF, or an extension and formatting the non-legacy portion according to transmission parameters defined in the trigger frame. In some examples, generating the non-legacy portion further includes generating an NDP indicator that identifies the NDP frame as being an NDP frame. The NDP indicator may be included in one of the HE-SIG-A, the HE-SIG-B, or the extension.

In some examples, the NDP frame is a clear to transmit (CTX) message. The CTX message may invoke an immediate NDP response from a recipient of the CTX message. In another example, the NDP frame is an NDP block ACK/ACK frame.

Thus, the method 2500 may provide for wireless communication. It should be noted that the method 2500 is just one implementation and that the operations of the method 2500 may be rearranged or otherwise modified such that other implementations are possible.

**FIG. 26** is a flow chart illustrating an example of a method 2600 for wireless communication, in accordance with various aspects of the present disclosure. For clarity, the method 2600 is described below with reference to aspects of one or more of the APs 105 or wireless stations 110 described with reference to FIGs. 1, 2, 12, 21, and 24, and/or aspects of one or more of the apparatuses described with reference to FIGs. 19, 20, 22, and 23. In some examples, an AP 105 or wireless station 110 may execute one or more sets of codes to control the functional elements of the AP 105 or wireless station 110 to perform the functions described below. Additionally or alternatively, the AP 105 or wireless station 110 may perform one or more of the functions described below using general-purpose or special-purpose hardware.

At block 2605, the method 2600 includes determining a legacy preamble portion of an NDP. The method 2600 includes determining an RL-SIG field at block 2610. The method 2600 also includes determining an HE-SIG-A field at block 2615. The legacy preamble portion, RL-SIG, and HE-SIG-A may be determined or generated according to details described herein. In one example, only the fields of the legacy preamble portion, the RL-SIG, and the HE-SIG-A may be included in an NDP frame. In other example NDP frames, other fields are included. As used herein, determining a field may include generating the information for that field or generating the field.

At block 2620, the method 2600 determines whether an HE-SIG-B field is going to be included in the NDP frame. If so, the method 2600 follows path 2625 to block 2630, where the method 2600 determines the HE-SIG-B. If the method 2600 is not going to include the HE-SIG-B, the method 2600 follows path 2635 to block 2640.

At block 2640, the method 2600 determines whether a per-station portion is going to be included in the NDP frame. If so, the method 2600 follows path 2645 to block 2650, where the method 2600 determines the per-station portion. If the method 2600 is not going to include the HE-SIG-B, the method 2600 follows path 2655 to block 2660.

At block 2660, the method 2600 determines whether the NDP is in response to a trigger frame. If so, the method 2600 follows path 2665 to block 2670, where the method 2600 checks whether any information that was included in the trigger frame was repeated in the NDP. In some examples, all or a part of the repeated information may be removed, or not included, in the NDP. If the NDP is not in response to a trigger frame, the method 2600 follows path 2675 to block 2680.

At block 2680, the method 2600 determines whether the NDP frame is going to be transmitted to multiple recipients. If so, the method 2600 follows path 2685 to block 2690, where the method 2600 transmits the NDP according to the bandwidth or spatial streams (SS). For example, the method 2600 may transmit the NDP frame over 80 MHz, wherein some portions of the NDP frame are repeated over 20 MHz channels. If the NDP frame is not going to be transmitted to multiple recipients, the method 2600 may just transmit the NDP on a single spatial stream or channel. Of course, in some examples, the NDP frame may be transmitted over more than one spatial stream or channel regardless of the number of recipients for the NDP frame.

In some cases, the format and content of the other fields (e.g., HE-SIG-A or HE-SIG-B) may depend on whether other fields are going to be included (e.g., HE-SIG-B or the per-station portion). In such examples, the method 2600 may determine which fields are going to be included before generating the fields that will be included.

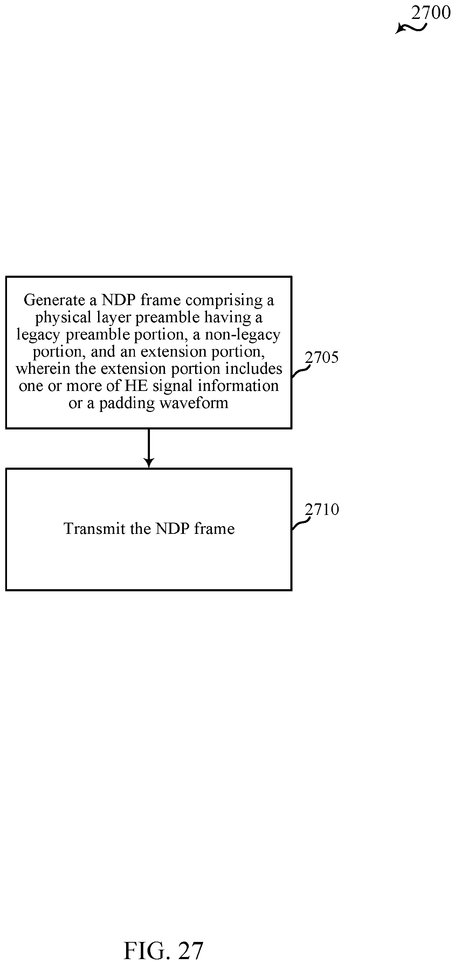

**FIG. 27** is a flow chart illustrating an example of a method 2700 for wireless communication, in accordance with various aspects of the present disclosure. For clarity, the method 2700 is described below with reference to aspects of one or more of the APs 105 or wireless stations 110 described with reference to FIGs. 1, 2, 12, 21, and 24, and/or aspects of one or more of the devices 1905 or apparatuses 2205 described with reference to FIGs. 19, 20, 22, and 23. In some examples, an AP 105 or wireless station 110 may execute one or more sets of codes to control the functional elements of the AP 105 or wireless station 110 to perform the functions described below. Additionally or alternatively, the AP 105 or wireless station 110 may perform one or more of the functions described below using general-purpose or special-purpose hardware.

At block 2705, the method 2700 includes, according to the invention, generating an NDP frame comprising a physical layer preamble having a legacy preamble portion, a non-legacy portion, and an extension portion, wherein the extension portion includes one or more of HE signal information or a padding waveform. The NDP frame may be generating having any of the structures described herein. The operation(s) at block 2705 may be performed using the AP NDP component 1915 or the station NDP component 2215 described with reference to FIGs. 19-24.

The NDP frame may be generated to include control information. In such an example, the method 2700 further includes determining control information for at least one station and includes the control information in the NDP frame. That is, an NDP frame may be used to carry control or management signaling. The control information may be included in one of a first HE signal field (HE-SIG-A), a second HE signal field (HE-SIG-B), or a third HE signal field/extension portion. The control or management information may include one field that indicates a type of information included in a HE-SIG field.

In an example of the method 2700, generating the NDP frame further includes generating the legacy portion to include one or more of a legacy short training field (L-STF), a legacy long training field (L-LTF), or a legacy signal field (L-SIG).

In some examples, the non-legacy portion is a high efficiency (HE) portion. The HE portion may have any of the structures and sub-frames described herein. In some examples of the method 2700, generating the NDP frame includes generating the non-legacy portion to include one or more of a repetition legacy signal (RL-SIG) field, an HE-SIG-A, an HE-SIG-B, an HE short training field (HE-STF), an HE long training field (HE-LTF), or an extension.

In some examples, generating the non-legacy portion further includes generating the RL-SIG field to include at least some of a same content as the legacy preamble portion. In some examples, generating the non-legacy portion also includes generating the HE-SIG-A to include information related to a format of a physical layer convergence protocol (PLCP) protocol data unit (PLDU).

At block 2710, the method 2700 may include transmitting the NDP frame. The operation(s) at block 2710 may be performed using the AP transmitter 1920, the transceivers 2130, the station transmitter 2220, or the transceivers 2130 described with reference to FIGs. 19-24. In some examples, transmitting the NDP frame further includes broadcasting the HE-SIG-A and the HE-SIG-B, wherein the HE-SIG-A and the HE-SIG-B comprise information for two or more stations. In another example, transmitting the NDP frame further includes transmitting the NDP to a plurality of recipient stations and unicasting at least one of the HE-STF, HE-LTF, or extension, wherein the HE portion comprises a different HE-STF, HE-LTF, or extension for each of the recipient stations. In some examples, unicasting further includes transmitting the at least one of the HE-STF, HE-LTF, or extension on one of a unique sub-band for each recipient station or a unique spatial stream for each recipient station.

In some examples, transmitting the NDP frame further includes transmitting a plurality of legacy preamble portions, one legacy preamble portion for each 20 megahertz (MHz) channel of a bandwidth comprising two or more 20 MHz channels. The non-legacy portion may be transmitted across the two or more 20 MHz channels.

Thus, the method 2700 may provide for wireless communication. It should be noted that the method 2700 is just one implementation and that the operations of the method 2700 may be rearranged or otherwise modified such that other implementations are possible.

In some examples, aspects from two or more of the methods 2500, 2600, and 2700 may be combined. It should be noted that the methods 2500, 2600, and 2700 are just example implementations, and that the operations of the methods 2500-2700 may be rearranged or otherwise modified such that other implementations are possible.

An NDP such as disclosed herein may be used, for example, in a sounding sequence that may be used in HE transmissions such as described above. HE sounding, in some deployments, may utilize certain parameters (*e.g*., certain CSI parameters) that may not be present in legacy communications, and in some examples such parameters may be provided by a wireless station using uplink MU mode operation. In some examples, when sounding is for HE stations, efficiencies may be obtained through merging an NDP announcement (NDPA) and beam refinement protocol (BRP) functionality into an HE NDPA, which may carry CSI parameters that are useful for the HE sounding procedure. Such CSI parameters may include, for example, quantization levels, and may indicate tones in which a wireless station should report CSI. In this regard, the NDPA, which can be a very high throughput (VHT) NDPA, merged with the BRP functionality may include information indicative of the HE sounding procedure. The wireless stations receiving the NDPA frame may implicitly determine that the NDPA frame relates to an HE sounding procedure based on receiving the NDP frame having HE portions. In some cases, the NDPA may include a first AID that is known by the receiving wireless stations to be invalid, improper, or false value, thereby identifying the NPDA as an HE NDPA. Additionally, or alternatively, the NPDA may include one or more bits (*e.g*., a single bit in some implementations) to aid the receiving wireless stations to determine that the NPDA as an HE NDPA

This HE NDPA can be transmitted by the AP transmitter 1920, the transceivers 2130, the station transmitter 2220, or the transceivers 2130 described with reference to FIGs. 19-24, and, in some cases, is transmitted prior to the NDP frame. According to various examples, an NDP may include information regarding an allocation of UL MU resources for a sounding response or per-STA parameterization of CSI, for example, in a manner such as discussed above.

The detailed description set forth above in connection with the appended drawings describes examples and does not represent the only examples that may be implemented or that are within the scope of the claims. The term "example," when used in this description, mean "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g*., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of" or "one or more of') indicates a disjunctive list such that, for example, a list of "at least one of A, B, or C" means A or B or C or AB or AC or BC or ABC (*i.e.,* A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, flash memory, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

## Claims

1. A method for wireless communication, comprising:
generating a null data packet, NDP, frame comprising a physical layer preamble having a legacy preamble portion (305), a non-legacy portion (310) conforming to a different standard or protocol than the legacy preamble portion (305), and an extension portion (315), wherein the extension portion (315) is one member from the group consisting of: high efficiency, HE, signal information and a padding waveform; and
transmitting the NDP frame (300);
wherein generating the NDP frame (300) comprises:
generating the non-legacy portion (310) to include a first HE signal field designated as HE-SIG-A and a second HE signal field different from the first signal field, wherein the second HE signal field comprises an HE long training field structure;
the method further comprising determining a duration of the extension portion (315) based at least in part on at least a number of HE long training fields in the HE long training field structure.

2. The method of claim 1, wherein generating the NDP frame (300) comprises:
determining channel state information, CSI, parameters for a CSI response to be provided responsive to the NDP frame (300); and
including an indication of the CSI parameters in the NDP frame (300).

3. The method of claim 1, wherein generating the NDP frame (300) further comprises:
determining control information for at least one station intended to receive the NDP frame (300); and
including the control information in the NDP frame (300).

4. The method of claim 1, wherein generating the NDP frame (300) further comprises:
determining control information for at least one station; and including the control information in the first HE signal field or in the second HE signal field.

5. The method of claim 1, wherein the second HE signal field comprises an HE short training field structure.

6. The method of claim 1, wherein the second HE signal field comprises an indication of an allocation of uplink multi-user resources for a response to the NDP frame (300) or information associated with a per-station parameterization of channel state information.

7. The method of claim 1, wherein the extension portion (315) is a padding waveform and the padding waveform comprises a third HE signal field different from the second HE signal field.

8. The method of claim 7, wherein the third HE signal field comprises an allocation of uplink multi-user resources for a response to the NDP frame (300) or a per-station parameterization of channel state information.

9. The method of claim 7, wherein the transmitting the NDP frame (300) further comprises:
transmitting the third HE signal field as a single spatial stream on a 20 MHz channel or transmitting the third HE signal field as duplicated spatial streams across two or more 20 MHz channels.

10. The method of claim 1, wherein the extension portion (315) is a padding waveform devoid of information or a padding waveform having physical layer information.

11. A communications device, comprising:
means for generating a null data packet, NDP, frame (300) comprising a physical layer preamble having a legacy preamble portion (305), a non-legacy portion (310) conforming to a different standard or protocol than the legacy preamble portion (305), and an extension portion (315), wherein the extension portion (315) is one member from the group consisting of: high efficiency, HE, signal information and a padding waveform; and
means for transmitting the NDP frame (300);
wherein the means for generating the NDP frame (300) comprises:
means for generating the non-legacy portion (310) to include a first HE signal field designated as HE-SIG-A and a second HE signal field different from the first signal field, wherein the second HE signal field comprises an HE long training field structure;
the device further comprising means for determining a duration of the extension portion (315) based at least in part on at least a number of HE long training fields in the HE long training field structure.

12. The communications device of claim 11, wherein the means for generating the NDP frame (300) further comprises:
means for determining channel state information, CSI, parameters for a CSI response to be provided responsive to the NDP frame (300); and
means for including an indication of the CSI parameters in the NDP frame (300).

13. The communications device of claim 11, wherein the means for generating the NDP frame (300) further comprises:
means for determining control information for at least one station intended to receive the NDP frame (300); and
means for including the control information in the NDP frame (300).

14. The communications device of claim 11, further comprising:
means for generating an NDP Announcement, NDPA, frame comprising information indicative of an HE sounding procedure; and
means for transmitting the NDPA frame prior to transmitting the NDP frame (300).

15. A computer program comprising instructions which, when the program is executed by a computer of a communications device, cause the communications device to carry out the method according to any one of the claims 1 to 10.

## Patentansprüche

1. Verfahren zur drahtlosen Kommunikation, umfassend:
Erzeugen eines Nulldatenpaket-, NDP-, Rahmens, umfassend eine Bitübertragungsschichtpräambel mit einem Legacy-Präambelabschnitt (305), einem Nicht-Legacy-Abschnitt (310), der einem anderen Standard oder Protokoll entspricht als der Legacy-Präambelabschnitt (305), und einem Erweiterungsabschnitt (315), wobei der Erweiterungsabschnitt (315) ein Mitglied aus der Gruppe ist, die aus Folgendem besteht: Hocheffizienz-, HE-, Signalinformation und einer Auffüllwellenform; und
Übertragen des NDP-Rahmens (300);
wobei Erzeugen des NDP-Rahmens (300) umfasst:
Erzeugen des Nicht-Legacy-Abschnitts (310), um ein erstes HE-Signalfeld, das als HE-SIG-A bezeichnet wird, und ein zweites HE-Signalfeld, das sich von dem ersten Signalfeld unterscheidet, einzuschließen, wobei das zweite HE-Signalfeld eine HE-Langtrainingsfeldstruktur umfasst;
wobei das Verfahren ferner Bestimmen einer Dauer des Erweiterungsabschnitts (315) mindestens teilweise basierend auf mindestens einer Anzahl von HE-Langtrainingsfeldern in der HE-Langtrainingsfeldstruktur umfasst.

2. Verfahren nach Anspruch 1, wobei Erzeugen des NDP-Rahmens (300) umfasst:
Bestimmen von Kanalzustandsinformations-, CSI-, Parametern für eine CSI-Antwort, die als Reaktion auf den NDP-Rahmen (300) bereitgestellt werden soll; und
Einschließen einer Anzeige der CSI-Parameter in den NDP-Rahmen (300).

3. Verfahren nach Anspruch 1, wobei Erzeugen des NDP-Rahmens (300) ferner umfasst:
Bestimmen von Steuerinformation für mindestens eine Station, die den NDP-Rahmen (300) empfangen soll; und
Einschließen der Steuerinformation in den NDP-Rahmen (300).

4. Verfahren nach Anspruch 1, wobei Erzeugen des NDP-Rahmens (300) ferner umfasst:
Bestimmen von Steuerinformation für mindestens eine Station; und Einschließen der Steuerinformation in das erste HE-Signalfeld oder in das zweite HE-Signalfeld.

5. Verfahren nach Anspruch 1, wobei das zweite HE-Signalfeld eine HE-Kurztrainingsfeldstruktur umfasst.

6. Verfahren nach Anspruch 1, wobei das zweite HE-Signalfeld eine Anzeige einer Zuweisung von Uplink-Mehrbenutzerressourcen für eine Antwort auf den NDP-Rahmen (300) oder Information, die mit einer Pro-Station-Parametrisierung von Kanalzustandsinformation assoziiert ist, umfasst.

7. Verfahren nach Anspruch 1, wobei der Erweiterungsabschnitt (315) eine Auffüllwellenform ist und die Auffüllwellenform ein drittes HE-Signalfeld umfasst, das sich von dem zweiten HE-Signalfeld unterscheidet.

8. Verfahren nach Anspruch 7, wobei das dritte HE-Signalfeld eine Zuweisung von Uplink-Mehrbenutzerressourcen für eine Antwort auf den NDP-Rahmen (300) oder eine Pro-Station-Parametrisierung von Kanalzustandsinformation umfasst.

9. Verfahren nach Anspruch 7, wobei das Übertragen des NDP-Rahmens (300) ferner umfasst:
Übertragen des dritten HE-Signalfelds als einen einzelnen räumlichen Strom auf einem 20-MHz-Kanal oder Übertragen des dritten HE-Signalfelds als duplizierte räumliche Ströme über zwei oder mehr 20-MHz-Kanäle.

10. Verfahren nach Anspruch 1, wobei der Erweiterungsabschnitt (315) eine Auffüllwellenform ohne Information oder eine Auffüllwellenform mit Bitübertragungsschichtinformation ist.

11. Kommunikationsvorrichtung, umfassend:
Mittel zum Erzeugen eines Nulldatenpaket-, NDP-, Rahmens (300), umfassend eine Bitübertragungsschichtpräambel mit einem Legacy-Präambelabschnitt (305), einem Nicht-Legacy-Abschnitt (310), der einem anderen Standard oder Protokoll entspricht als der Legacy-Präambelabschnitt (305), und einem Erweiterungsabschnitt (315), wobei der Erweiterungsabschnitt (315) ein Mitglied aus der Gruppe ist, die aus Folgendem besteht: Hocheffizienz-, HE-, Signalinformation und einer Auffüllwellenform; und
Mittel zum Übertragen des NDP-Rahmens (300);
wobei das Mittel zum Erzeugen des NDP-Rahmens (300) umfasst:
Mittel zum Erzeugen des Nicht-Legacy-Abschnitts (310), um ein erstes HE-Signalfeld, das als HE-SIG-A bezeichnet wird, und ein zweites HE-Signalfeld, das sich von dem ersten Signalfeld unterscheidet, einzuschließen, wobei das zweite HE-Signalfeld eine HE-Langtrainingsfeldstruktur umfasst;
wobei die Vorrichtung ferner Mittel zum Bestimmen einer Dauer des Erweiterungsabschnitts (315) mindestens teilweise basierend auf mindestens einer Anzahl von HE-Langtrainingsfeldern in der HE-Langtrainingsfeldstruktur umfasst.

12. Kommunikationsvorrichtung nach Anspruch 11, wobei das Mittel zum Erzeugen des NDP-Rahmens (300) ferner umfasst:
Mittel zum Bestimmen von Kanalzustandsinformations-, CSI-, Parametern für eine CSI-Antwort, die als Reaktion auf den NDP-Rahmen (300) bereitgestellt werden soll; und
Mittel zum Einschließen einer Anzeige der CSI-Parameter in den NDP-Rahmen (300).

13. Kommunikationsvorrichtung nach Anspruch 11, wobei das Mittel zum Erzeugen des NDP-Rahmens (300) ferner umfasst:
Mittel zum Bestimmen von Steuerinformation für mindestens eine Station, die den NDP-Rahmen (300) empfangen soll; und
Mittel zum Einschließen der Steuerinformation in den NDP-Rahmen (300).

14. Kommunikationsvorrichtung nach Anspruch 11, ferner umfassend:
Mittel zum Erzeugen eines NDP-Ankündigungs-, NDPA-, Rahmens, der
Mittel zum Übertragen des NDPA-Rahmens vor dem Übertragen des NDP-Rahmens (300).

15. Computerprogramm, umfassend Anweisungen, die, wenn das Programm von einem Computer einer Kommunikationsvorrichtung ausgeführt wird, die Kommunikationsvorrichtung veranlassen, das Verfahren nach einem der Ansprüche 1 bis 10 auszuführen.

## Revendications

1. Un procédé de communication sans fil comprenant :
la génération d'une trame de paquet de données nulles, NDP, comprenant un préambule de couche physique ayant une partie de préambule héritée (305), une partie non héritée (310) se conformant à une norme ou un protocole différents de ceux de la partie de préambule héritée (305), et une partie d'extension (315), dans lequel la partie d'extension (315) est un élément du groupe formé par : une information de signal à haute efficacité, HE, et une forme d'onde de remplissage ; et
la transmission de la trame NDP (300) ;
dans lequel la génération de la trame NDP (300) comprend :
la génération de la partie non héritée (31s0) pour inclure un premier champ de signal HE désigné en tant que HE-SIG-A et un deuxième champ de signal HE différent du premier champ de signal, dans lequel le deuxième champ de signal HE comprend une structure de champs d'apprentissage longs HE ;
le procédé comprenant en outre la détermination d'une durée de la partie d'extension (315) sur la base au moins en partie d'au moins un nombre de champs d'apprentissage longs HE dans la structure de champs d'apprentissage longs HE.

2. Le procédé selon la revendication 1, dans lequel la génération de la trame NDP (300) comprend en outre :
la détermination de paramètres d'information d'état de canal, CSI, pour une réponse CSI à fournir en réponse à la trame NDP (300) ; et
l'insertion d'une indication des paramètres CSI dans la trame NDP (300).

3. Le procédé selon la revendication 1, dans lequel la génération de la trame NDP (300) comprend en outre :
la détermination d'informations de contrôle pour au moins une station destinée à recevoir la trame NDP (300) ; et
l'insertion des informations de contrôle dans la trame NDP (300) .

4. Le procédé selon la revendication 1, dans lequel la génération de la trame NDP (300) comprend en outre :
la détermination d'informations de contrôle pour au moins une station ; et
l'insertion des informations de contrôle dans le premier champ de signal HE ou dans le deuxième champ de signal HE.

5. Le procédé selon la revendication 1, dans lequel le deuxième champ de signal HE comprend une structure de champs d'apprentissage courts HE.

6. Le procédé selon la revendication 1, dans lequel le deuxième champ de signal HE comprend une indication d'une attribution de ressources multiutilisateurs de liaison montante pour une réponse à la trame NDP (300) ou des informations associées à un paramétrage par station d'informations d'état de canal.

7. Le procédé selon la revendication 1, dans lequel la partie d'extension (315) est une forme d'onde de remplissage et la forme d'onde de remplissage comprend un troisième champ de signal HE différent du deuxième champ de signal HE.

8. Le procédé selon la revendication 7, dans lequel le troisième champ de signal HE comprend une attribution de ressources multiutilisateurs de liaison montante pour une réponse à la trame NDP (300) ou un paramétrage par station d'informations d'état de canal.

9. Le procédé selon la revendication 7, dans lequel la transmission de la trame NDP (300) comprend en outre :
la transmission du troisième champ de signal HE en tant que flux spatial unique sur un canal de 20 MHz ou la transmission du troisième champ de signal HE en tant que flux spatiaux dupliqués sur deux canaux de 20 MHz ou plus.

10. Le procédé selon la revendication 1, dans lequel la partie d'extension (315) est une forme d'onde de remplissage dépourvue d'informations ou une forme d'onde de remplissage ayant des informations de couche physique.

11. Un dispositif de communication comprenant :
un moyen pour générer une trame de paquet de données nulles, NDP, (300) comprenant un préambule de couche physique ayant une partie de préambule héritée (305), une partie non héritée (310) se conformant à une norme ou un protocole différents de ceux de la partie de préambule héritée (305), et une partie d'extension (315), dans lequel la partie d'extension (315) est un élément du groupe formé par : une information de signal à haute efficacité, HE, et une forme d'onde de remplissage ; et
un moyen pour transmettre la trame NDP (300) ;
dans lequel le moyen pour générer la trame NDP (300) comprend :
un moyen pour générer la partie non héritée (310) pour inclure un premier champ de signal HE désigné en tant que HE-SIG-A et un deuxième champ de signal HE différent du premier champ de signal, dans lequel le deuxième champ de signal HE comprend une structure de champs d'apprentissage longs HE ;
le dispositif comprenant en outre un moyen pour déterminer une durée de la partie d'extension (315) sur la base au moins en partie d'au moins un nombre de champs d'apprentissage longs HE dans la structure de champs d'apprentissage longs HE.

12. Le dispositif de communication selon la revendication 11, dans lequel le moyen pour générer la trame NDP (300) comprend en outre :
un moyen pour déterminer de paramètres d'information d'état de canal, CSI, pour une réponse CSI à fournir en réponse à la trame NDP (300) ; et
un moyen pour insérer une indication des paramètres CSI dans la trame NDP (300).

13. Le dispositif de communication selon la revendication 11, dans lequel le moyen pour générer la trame NDP (300) comprend en outre :
un moyen pour déterminer des informations de contrôle pour au moins une station destinée à recevoir la trame NDP (300) ; et
un moyen pour insérer les informations de contrôle dans la trame NDP (300).

14. Le dispositif de communication selon la revendication 11, comprenant en outre :
un moyen pour générer une trame d'annonce NDP, NDPA, comprenant des informations indicatives d'une procédure de sondage HE ; et
un moyen pour transmettre la trame NDPA avant la transmission de la trame NDP (300).

15. Un programme de calculateur comprenant des instructions qui, quand le programme est exécuté par un calculateur d'un dispositif de communication, amènent le dispositif de communication à réaliser le procédé selon l'une des revendications 1 à 10.
